# EUROPEAN PATENT SPECIFICATION

(11) **EP 4 507 115 B1**
(45) Date of publication and mention of the grant of the patent: **11.11.2026**
(21) Application number: 23830336.6
(22) Date of filing: 28.06.2023
(51) Int. Cl.: H01M 50/179, H01M 50/342, H01M 50/107, H01M 50/152, H01M 50/30, H01M 50/507, H01M 50/55, H01M 50/566

(54) **BATTERY CELL, BATTERY, AND ELECTRICAL DEVICE**
BATTERIEZELLE, BATTERIE UND ELEKTRISCHE VORRICHTUNG
ÉLÉMENT DE BATTERIE, BATTERIE ET DISPOSITIF ÉLECTRIQUE

(30) Priority: 28.06.2022 WO PCT/CN2022/101981
(43) Date of publication of application: 12.02.2025
(73) Proprietor: Contemporary Amperex Technology (Hong Kong) Limited, Central, Hong Kong (HK)
(72) Inventor: CHAI, Zhisheng, Ningde, Fujian 352100 (CN); JIN, Haizu, Ningde, Fujian 352100 (CN); YANG, Rui, Ningde, Fujian 352100 (CN); QIN, Feng, Ningde, Fujian 352100 (CN)
(74) Representative: Ran, Handong
(86) International application number: PCT/CN2023/103210
(87) International publication number: WO 2024/002163

(56) References cited:
- CN-U- 216 085 200
- CN-U- 216 085 238
- CN-U- 216 213 727
- CN-U- 216 213 942
- CN-U- 216 213 942
- CN-U- 217 823 121
- US-A- 5 979 694

## Description

### CROSS-REFERENCES TO RELATED APPLICATIONS

This application is based on and claims priority to International Application No. PCT/CN2022/101981, filed on June 28, 2022.

### FIELD

The present disclosure relates to the technical field of batteries, and in particularly, to a battery cell, a battery, and an electric device.

### BACKGROUND

Lithium ions and other batteries are commonly used in electric vehicles because they have the advantages of high energy density, high power density, large number of cycle use, long storage time, and the like.

However, improving safety of a battery in an electric vehicle during use is always a challenge for the industry.
CN 216213942U describes a battery cell including a case having an opening; an electrode assembly accommodated in the case; and an end cover including a cover body and a convex part, a pressure relief being provided on the end cover.

### SUMMARY

The present disclosure aims to improve safety of a battery during use. Aspects of the invention are set out in the appended claims.

This application provides a battery cell. The battery cell includes: an electrode assembly including an electrode body, a first tab, and a second tab with an opposite polarity to the first tab; a first output electrode and a second output electrode; and a housing configured to accommodate the electrode assembly. The first tab and the second tab extend from the electrode body. The first output electrode is electrically connected to the first tab, and the second output electrode is electrically connected to the second tab. The housing is provided with a pressure relief unit. In a first direction, the first output electrode and the second output electrode are disposed at an end of the housing, and the pressure relief unit is disposed at another end of the housing.

In this example, the first output electrode and the second output electrode are disposed at the one end of the housing, and the pressure relief unit is disposed at the other end of the housing. When thermal runaway occurs inside the battery cell, an active substance sprayed out from an end where the pressure relief unit is located is away from each of the first output electrode and the second output electrode of the battery cell, and thus is away from a busbar used for electrically connecting a plurality of battery cells. In this way, the influence on the electrical connection between the battery cells can be reduced during the occurrence of thermal runaway, which prevents the occurrence of extensive short circuits or high-voltage ignitions in the battery from causing thermal runaway of the whole power battery system or even causing fire and explosions, thereby improving operation safety of the power battery system. Secondly, the pressure relief unit and the output electrode are disposed at the two ends of the housing, which provide a large room for the arrangement of the pressure relief unit. In this way, an overcurrent capacity of the output electrode can be improved. Moreover, the pressure relief unit can be conveniently processed, and an opening pressure of the pressure relief unit can be accurately controlled and be prevented from being affected by welding stress during welding of the busbar. In addition, the first output electrode and the second output electrode are disposed at a same end of the housing. When the plurality of battery cells is electrically connected to each other, mounting and connection of the busbar can be facilitated.

The housing includes a first end wall, a second end wall opposite to the first end wall in the first direction, and a side wall located between the first end wall and the second end wall. The first end wall has a first through hole, and the second end wall is provided with the pressure relief unit; the battery cell has an electrode leading-out portion mounted at the first through hole and insulated from the first end wall; and the electrode leading-out portion is the first output electrode, and the first end wall is the second output electrode.

In this example, the electrode leading-out portion and the first end wall are disposed at the same end of the housing, and the pressure relief unit is disposed at the other end of the housing. When thermal runaway occurs inside the battery cell, the active substance sprayed out from the end where the pressure relief unit is located is away from the electrode leading-out portion and the first end wall of the battery cell, and thus is away from the busbar for electrically connecting the plurality of battery cells. In this way, the influence on the electrical connection between the battery cells can be reduced during the occurrence of thermal runaway.

In some examples, the housing includes: an accommodation portion having an opening; and an end cover configured to cover the opening. The accommodation portion is defined by the first end wall and the side wall. The end cover is the second end wall.

In this example, the pressure relief unit is disposed at the end cover independent of the accommodation portion, which can lower process difficulty of providing the pressure relief unit, and more facilitate providing the pressure relief unit integrally at the end cover. Moreover, it is easy to control size accuracy of a weak region of the pressure relief unit during processing, to improve setting precision of the opening pressure of the pressure relief unit. When thermal runaway occurs in the battery cell, the pressure relief unit can be reliably opened, thereby improving the operation safety of the battery cell.

Moreover, since each of the first output electrode and the second output electrode is disposed at the first end wall integrally arranged with the side wall and are not disposed at the end cover, pulling of a connection between the end cover and the side wall by the busbar is reduced, to avoid generating fatigue at the connection, thereby reducing the influence of the busbar on the pressure relief unit. To some extent, damage to the pressure relief unit during normal use of the battery cell is reduced, and pressure relief in advance is prevented.

In some examples, the housing includes: an accommodation portion having an opening; and an end cover configured to cover the opening. The accommodation portion is defined by the second end wall and the side wall. The end cover is the first end wall.

In this example, the electrode leading-out portion is disposed at the end cover independent of the accommodation portion, so that the electrode leading-out portion can be conveniently mounted at the end cover.

In some examples, the first tab extends from the electrode body in the first direction and in a direction facing towards the electrode leading-out portion and is electrically connected to the electrode leading-out portion; and the second tab extends from the electrode body in the first direction and in a direction facing away from the electrode leading-out portion and is electrically connected to the first end wall.

In this example, the first tab and the second tab respectively extend from two ends of the electrode body, which can improve an overcurrent capacity, and easily ensure insulation reliability between the first tab and the second tab, thereby improving operation performance of the battery cell.

In some examples, the battery cell further includes a first current collector and a second current collector. The first tab is electrically connected to the electrode leading-out portion through the first current collector. The second tab is electrically connected to the first end wall through the second current collector.

In this example, the first tab is electrically connected to the electrode leading-out portion through the first current collector, and the second tab is electrically connected to the first end wall through the second current collector, which can facilitate welding with the tab, and improve reliability of an electrical connection between the first tab and the electrode leading-out portion and reliability of an electrical connection between the second tab and the first end wall.

In some examples, the second tab is in electrical conduction with the first end wall through a contact between the second current collector and the side wall.

In this example, a link where the second tab transmits power to the first end wall can be reduced, which can improve reliability of power transmission.

In some examples, the housing includes an accommodation portion having an opening and an end cover configured to cover the opening. The second tab is in electrical conduction with the first end wall through a connection between the second current collector and end cover and through an electrical connection between the end cover and the side wall.

In this example, the second tab is electrically connected to the end cover. For example, when the electrical connection is realized by welding, the end cover has a flat welding surface, which is convenient for welding and better in welding effect, and can improve reliability of an electrical connection between the second tab and the first end cover.

In some examples, the housing includes an accommodation portion having an opening and an end cover configured to cover the opening. The second tab is in electrical conduction with the first end wall through a contact between the second current collector and the side wall and through a connection between the end cover and the second current collector.

In this example, the power transmitted by the second tab can be transmitted to the first end cover through the two conductive paths. When one of the two conductive paths is virtually connected, the power can be continuously transmitted through the other conductive path, thereby improving the reliability of power transmission.

In some examples, in the first direction, the second current collector is located between the pressure relief unit and the second tab. The second current collector is provided with a hollow portion for gas conduction between a space of a side of the second current collector facing towards the second tab and a space of another side of the second current collector facing towards the pressure relief unit.

In this example, considering that the electrode leading-out portion and the pressure relief unit are disposed at two opposite ends of the housing, by providing the hollow portion at the second current collector, when thermal runaway occurs in any region inside the battery cell, a high-temperature and high-pressure gas can be allowed to smoothly reach the pressure relief unit through the hollow portion, to be discharged outwards timely through the pressure relief unit, thereby improving safety of the battery cell when thermal runaway occurs.

In some examples, the hollow portion includes at least one fourth through hole. One of the at least one fourth through hole is formed at a center position of the second current collector.

Generally, a gas in the electrode assembly is discharged out to an outer side of the electrode assembly through a tab side, and the fourth through hole is formed at a center of the second current collector, so that the gas discharged from each region of the second tab can reach the fourth through hole timely, thereby smoothly reaching the pressure relief unit.

In some examples, the at least one fourth through hole includes a plurality of fourth through holes. The rest of the plurality of fourth through holes are distributed around the fourth through hole located at the center position of the second current collector.

In this example, a gas exhaust area can be reasonably increased, and a problem of untimely gas exhaust caused by blockage of the center position of the second current collector is solved to some extent.

In some examples, the hollow portion further includes a plurality of slots penetrating the second current collector in the first direction and surrounding the at least one fourth through hole.

In this example, the plurality of slots is disposed on the basis of the fourth through hole, so that the fourth through hole can be assisted to exhaust gas. When thermal runaway occurs in the battery cell, an airflow can be allowed to reach the pressure relief unit through the fourth through hole and the plurality of slots simultaneously. Moreover, the slot has an elongated shape, which can reduce weakening for a strength of the second current collector based on the realization of gas exhaust, and is also easy to be processed.

In some examples, the plurality of slots has an end in communication with the at least one fourth through hole and extending in a direction away from the at least one fourth through hole.

In this example, reliable gas exhaust can be achieved in a region from the center of the second current collector to a periphery of the second current collector. When thermal runaway occurs in the battery cell, the airflow can flow to the pressure relief unit more smoothly and timely.

In some examples, the hollow portion further includes at least one scribing line penetrating the second current collector along the first direction.

In this example, a plurality of scribing lines is provided on the basis of the fourth through hole, to assist in gas exhaust of the fourth through hole. When thermal runaway occurs in the battery cell, the airflow can reach the pressure relief unit through the fourth through hole and the plurality of scribing lines simultaneously. Moreover, the scribing line can reduce the weakening for the strength of the second current collector based on the implementation of gas exhaust to an utmost extent.

In some examples, the at least one scribing line includes a plurality of scribing lines. The plurality of scribing lines has an end in communication with the at least one fourth through hole and extending in a direction away from the at least one fourth through hole.

In this example, reliable gas exhaust can be achieved in the region from the center of the second current collector to the periphery of the second current collector. When thermal runaway occurs in the battery cell, the airflow can flow to the pressure relief unit more smoothly and timely.

In some examples, each of the first tab and the second tab extends from an end of the electrode body facing towards the electrode leading-out portion and along the first direction. The first tab is electrically connected to the electrode leading-out portion, and the second tab is electrically connected to the first end wall.

In this example, each of the first tab and the second tab extends from the end of the electrode body facing towards the electrode leading-out portion, which facilitates the realization of the electrical connection. Moreover, the first tab and the second tab only need to occupy space on a single side of the electrode body, which can shorten a height of the battery cell, and is beneficial to an improvement in an energy density of the battery cell.

In some examples, the battery cell further includes a first current collector and a second current collector. The first tab is electrically connected to the electrode leading-out portion through the first current collector. The second tab is electrically connected to the first end wall through the second current collector. The electrode leading-out portion includes a base and a main body. The base is located between the first end wall and the first current collector and configured to limit a movement of the electrode leading-out portion along a direction of the first direction facing away from an interior of the housing. An insulation member is provided between the first end wall and the base, and the main body is at least partially located in the first through hole.

In this example, the electrode leading-out portion can be prevented from being disengaged from the first through hole through a limiting effect of the base, which improves reliability of an electrical connection between the electrode leading-out portion and the first current collector. Moreover, insulation between the electrode leading-out portion and the first end wall can be further achieved through the insulation member.

In some examples, in the first direction: a maximum thickness t1 of the base satisfies: 0.6mm≤t1≤1.2mm; and/or a maximum thickness t2 of the first current collector satisfies: 0.3mm≤t2≤0.7mm; and/or a maximum thickness t3 of the second current collector satisfies: 0.3mm≤t3≤0.7mm.

In this example, by setting a proper thickness for each of the base of the electrode leading-out portion, the first current collector, and the second current collector, it can be ensured that gas is discharged out through the pressure relief unit when thermal runaway occurs in the battery cell and is prevented from being sprayed out of a side of the electrode leading-out portion and a side of the first end wall, thereby improving the operation safety of the battery cell.

In some examples, 0.8mm≤t1≤1mm, and/or 0.4mm≤t2≤0.6mm, and/or 0.4mm≤t3≤0.6mm.

In some examples, the electrode leading-out portion further includes a limiting protruding portion. Each of the base and the limiting protruding portion is connected to and protrudes from an outer peripheral wall of the main body, and the limiting protruding portion and the base are respectively located at an outer side and an inner side of the first end wall along the first direction and are configured to sandwich a part of the first end wall.

In this example, a part of the first end wall is sandwiched by the limiting protruding portion and the base, so that the electrode leading-out portion can be mounted at the first end wall more stably and reliably.

In some examples, the main body is provided with a recess having a bottom wall and an opening; the electrode leading-out portion is in electrical conduction with the first tab through a connection between the bottom wall of the recess and the first current collector; and the opening of the recess is located at a side of the main body facing towards and/or away from the interior of the housing.

In this example, by providing the recess at the main body, a thickness of a region where the main body is electrically connected to the first current collector can be reduced, and reliability of the electrical connection between the main body and the first current collector can be improved.

In some examples, the bottom wall of the recess and the first current collector are laser-welded to each other on the side of the main body away from the interior of the housing.

In this example, by providing the recess, a thickness of a region where the main body is welded to the first current collector is reduced, and the main body can be conveniently welded to the first current collector from an outer side of the electrode leading-out portion, which can improve welding reliability. Moreover, metal ions generated by welding will not enter the housing, which can improve reliability of the battery cell.

The housing is in a cylinder shape; the pressure relief unit is disposed at a center position of the second end wall and in a circular shape; and the pressure relief unit has a pressure relief region. A diameter φ1 of the pressure relief region and a diameter φ of the housing satisfy: $0.35 \leq \frac{∅ 1}{∅} \leq 0.85$.

In this example, by setting a relationship between the diameter of the pressure relief region of the pressure relief unit and the diameter of the housing, when thermal runaway occurs in the battery cell, it can be ensured that the pressure relief unit has a sufficient opening area, so that heat is quickly discharged out of the battery cell, thereby avoiding the occurrence of damage or even thermal leakage of the electrode leading-out portion or the housing. Moreover, on the basis that it is ensured that the pressure relief unit is reliably opened, a strength of an end of the housing provided with the pressure relief unit can also be improved, and problems of liquid leakage, abnormal electrical connection, and the like caused by opening of the pressure relief unit resulting from an internal air pressure during normal use of the battery cell are prevented.

In some examples, 15mm≤φ≤70mm.

In some examples, a thickness *l*1 of the first end wall and a thickness *l*2 of the second end wall satisfy: *l*1≥*l*2.

In this example, the thickness of the first end wall is greater than the thickness of the second end wall. In this way, when thermal runaway occurs inside the battery cell, a deformation amount of the housing at a pressure relief unit side is greater than a deformation amount at a side where the electrode leading-out portion and the first end wall are located, so that a gas generated by thermal runaway is reliably discharged from the pressure relief unit at the second end wall, thereby preventing the gas from flowing towards a side where the electrode leading-out portion is located to cause a large deformation amount to occur in the first end wall, and preventing the occurrence of thermal leakage of the housing when thermal runaway occurs in the housing.

In some examples, *l*1≥1.5* *l*2.

In some examples, the thickness *l*1 of the first end wall satisfies: 0.5mm≤*l*1≤1mm; and/or the thickness *l*2 of the second end wall satisfies: 0.3mm≤*l*2≤1mm.

In this example, a proper thickness is designed for each of the first end wall and the second end wall. When thermal runaway occurs in the battery cell, a large deformation amount of the housing is caused under the action of an internal high-pressure gas, to prevent the occurrence of the thermal leakage of the housing when thermal runaway occurs in the housing.

In some examples, 0.6mm≤*l*1≤0.8mm, and/or 0.5mm≤*l*2≤0.8mm.

In some examples, the second end wall has a notch. The pressure relief unit is disposed at a region of the second end wall that is enclosed by the notch.

In this example, when thermal runaway occurs in the battery cell, after an internal pressure exceeds a predetermined opening pressure of the pressure relief unit, the notch breaks to open the pressure relief unit, and an airflow in the housing is discharged outwards through the opening. Therefore, the operation safety of the battery cell is improved.

In some examples, a thickness *l*1 of the first end wall and a thickness *l*3 of the notch disposed on the second end wall satisfy: *l*1≥2**l*3.

In this example, by setting a size relationship between the thickness of the first end wall and the thickness of the notch disposed on the second end wall, a weak part with a lower strength than that of the first end wall may be formed at the notch. When thermal runaway occurs in the battery cell, an internal gas can be allowed to preferentially deform at the weak part to enable the pressure relief unit to be quickly opened, so that the internal gas is smoothly discharged. Moreover, even if thermal runaway occurs at a side close to the electrode leading-out portion, the gas can be allowed to flow preferentially towards the pressure relief unit, which can avoid the occurrence of a large deformation amount of a region where the first end wall is located under the action of the internal high-pressure gas can be prevented, prevent the occurrence of the thermal leakage of the housing during thermal runaway occurs in the housing, and improve safety of the battery cell at the side where the electrode leading-out portion and the first end wall are located.

In some examples, *l*1≥6**l*3.

In some examples, the pressure relief unit is in a circular shape and has a pressure relief region. A diameter φ2 of the first through hole and a diameter φ1 of the pressure relief region satisfying: φ2≤φ1.

In this example, the diameter of the first through hole for mounting the electrode leading-out portion does not exceed the diameter φ1 of the pressure relief region, so that a strength of the housing at the first end wall having the electrode leading-out portion can be improved. When thermal runaway occurs in the battery cell, the gas can flow preferentially towards the pressure relief unit, which can avoid the occurrence of a large deformation amount of the region where 0.the first end wall is located under the action of the internal high-pressure gas, avoid the occurrence of thermal leakage of the housing during thermal runaway occurs in the housing, and improve the safety of the battery cell at the side where the electrode leading-out portion and the first end wall are located.

In some examples, the diameter φ2 of the first through hole satisfies: 8mm≤φ2≤25mm; and/or the diameter φ1 of the pressure relief region satisfies: 20mm ≤ ϕ 1≤35mm.

In this example, by designing an appropriate size for the diameter of the first through hole and the diameter of the pressure relief region, a strength of the housing located at an end of the electrode leading-out portion can be ensured. When thermal runaway occurs in the battery cell, the gas can flow preferentially towards the pressure relief unit, so that the occurrence of a large deformation amount of the region where the first end wall is located under the action of the internal high-pressure gas can be prevented, the occurrence of the thermal leakage of the housing during thermal runaway occurs in the housing is prevented, and the safety of the battery cell at the side where the electrode leading-out portion and the first end wall are located is improved.

In some examples, the electrode assembly is formed by winding a first electrode sheet, a second electrode sheet with an opposite polarity to the first electrode sheet, and a separator around a winding axis. The winding axis extends along a direction consistent with the first direction, and each of the first electrode sheet and the second electrode sheet has the first tab and the second tab; and the electrode assembly has a second through hole disposed at a center of the electrode assembly and extending in the first direction. The pressure relief unit is in a circular shape and has a pressure relief region, and a maximum diameter φ3 of the second through hole and a diameter φ1 of the pressure relief region satisfy: φ3≥0.12*φ1.

In this example, the diameter of the second through hole and the diameter of the pressure relief region satisfy the above relationship. When thermal runaway occurs in the battery cell, the second through hole has enough channel size to allow for a quick inflow of the internal high-pressure gas to the pressure relief unit, so that the pressure relief unit is smoothly opened, which prevents the heat from gathering in the battery cell and being unable to be released, and avoids the occurrence of thermal leakage caused by large deformation and damage of the housing, thereby improving the operation safety of the battery cell.

In some examples, the housing includes a second end wall. The pressure relief unit is located at a central region of the second end wall.

In this example, by providing the pressure relief unit at a central region of the end cover, when thermal runaway occurs in the battery cell, an internal high-temperature and high-pressure airflow has a short airflow path no matter which direction reaches the pressure relief unit, so that the pressure relief unit is opened timely, thereby improving operation reliability and safety of the battery cell.

This application further provides a battery. The battery includes the battery cell according to the above examples.

In some examples, the housing includes a first end wall having a first through hole. The battery cell has an electrode leading-out portion mounted at the first through hole and insulated from the first end wall. The electrode leading-out portion is a first output electrode, and the first end wall is a second output electrode; and the battery includes a plurality of battery cells and further includes a busbar. An end of the busbar is electrically connected to an electrode leading-out portion of one of the plurality of battery cells, and another end of the busbar is electrically connected to a first end wall of another one of the plurality of battery cells.

In this example, by using the electrode leading-out portion as the first output electrode of the battery cell and the first end wall as the second output electrode of the battery cell, when it is realized that the plurality of battery cells in the battery are connected in series, in parallel, or in parallel and in series, two ends of the busbar may be directly connected to the electrode leading-out portion and the first end wall, respectively. Since only one electrode leading-out portion is provided on the first end wall of the housing, it is beneficial to an increase in a conductive area of the electrode leading-out portion. Moreover, an electrical connection on the first end wall is also easily realized by welding or through a fastener connection. Therefore, the difficulty of an electrical connection between the plurality of battery cells can be lowered, the reliability of the electrical connection can be improved, and the operation performance and reliability of the battery can be ensured.

In some examples, a housing includes a first end wall having a first through hole. The battery cell has an electrode leading-out portion mounted at the first through hole and insulated from the first end wall. The electrode leading-out portion is a first output electrode, and the first end wall is a second output electrode; and the battery further includes a plurality of busbars. In a same battery cell, the electrode leading-out portion is electrically connected to one of the plurality of busbars, and the first end wall is electrically connected to another one of the plurality of busbars.

**In** this example, each battery cell may be electrically connected to other two battery cells through two separate busbars. Since a region where the first end wall is located around the electrode leading-out portion can be used for a connection with the busbar, it can be adapted to different arrangement manners of the plurality of battery cells.

In some examples, the battery further includes a support plate and a box body assembly. The battery cell is mounted in the box body assembly through the support plate. The support plate has a third through hole defined thereon for flowing of a discharge object escaping from a pressure relief unit. The pressure relief unit is in a circular shape and has a pressure relief region, and a minimum distance D between the pressure relief unit and an inner wall of the box body assembly and a diameter φ1 of the pressure relief region satisfy: 0.4*φ1≤D≤1.2*φ1.

**In** this example, by providing a proper distance between the pressure relief unit and the inner wall of the box body assembly, the internal gas and the active substance not only can be allowed to be effectively sprayed out when thermal runaway occurs in the battery cell, allowing the battery to be quickly cooled, but the height of the battery cell can also be increased as much as possible on the basis of satisfying thermal runaway safety, thereby increasing the energy density of the battery cell and enabling the battery to provide greater power.

This application further provides an electric device. The electric device includes the battery according to the above examples. The battery is configured to supply power to the electric device.

**In** some examples, the electric device includes a vehicle. The battery is provided between a cabin and a vehicle bottom plate. Each of the first output electrode and the second output electrode faces towards the cabin, and a pressure relief unit faces towards the vehicle bottom plate.

**In** this example, when thermal runaway occurs in the battery during use, since the pressure relief unit of the battery cell is disposed facing towards the vehicle bottom plate, i.e., disposed downwards, in response to that the pressure relief unit is opened, the discharge object released by the battery is sprayed out towards underneath the vehicle, which can reduce an impact of high temperature and high pressure on the cabin and passengers, and improve safety of the vehicle during use.

### BRIEF DESCRIPTION OF THE DRAWINGS

**In** order to clearly explain technical solutions of embodiments of the present disclosure, drawings used in the description of the embodiments or the related art are briefly described below. The drawings as described below are merely some embodiments of the present disclosure. Based on these drawings, other drawings can be obtained by those skilled in the art without creative effort.
FIG. 1 is a schematic structural view of some embodiments where a battery is mounted on a vehicle according to the present disclosure.
FIG. 2 is an exploded view of some embodiments of a battery according to the present disclosure.
FIG. 3 is a schematic structural view of some embodiments of a battery cell according to the present disclosure.
FIG. 4 is an exploded view of some embodiments of a battery cell according to the present disclosure.
FIG. 5 is a cross-sectional view of some embodiments of a battery cell according to the present disclosure.
FIG. 6 is a schematic structural view of some embodiments of an electrode assembly.
FIG. 7 is a schematic end view of some embodiments of an electrode assembly.
FIG. 8A, FIG. 8B, FIG. 8C, FIG. 8D, and FIG. 8E are schematic structural views of different embodiments of a second current collector, respectively.
FIG. 9 is a schematic view of a size of some embodiments of a battery cell according to the present disclosure.
FIG. 10 is an enlarged view at A in FIG. 9.
FIG. 11 is a schematic structural view of an electrical connection between two battery cells.
FIG. 12 is a schematic structural view where a battery cell is mounted at a box body assembly through a support plate in a battery of the present disclosure.

In the accompanying drawings, the accompanying drawings are not drawn to actual scale.

Reference numerals are as follows:
100, battery cell; 10, housing; 1, accommodation portion; 11, opening; 12, first through hole; 13, first end wall; 14, second end wall; 15, side wall; 2, end cover; 21, pressure relief unit; 22, notch; 23, recessed portion; 3, electrode leading-out portion; 31, main body; 32, base; 33; limiting protruding portion; 34, recess; 341, first recess; 342, second recess; 343, third through hole; 4, electrode assembly; 41, electrode body; 42, first tab; 43, second tab; 44, second through hole; 45', first coating layer; 46, second electrode sheet; 46', second coating layer; 47, separator; 5, first current collector; 6, second current collector; 6', hollow portion; 61, fourth through hole; 62, scribing line; 63, slot; 7, insulation member; 8, cover plate; K, winding axis; z, first direction; y, second direction; x, third direction;
200, battery; 201, box body assembly; 201A, box body portion; 201B, first cover; 201C, second cover; 202, busbar; 202A, first portion; 202B, second portion; 202C, third portion; 203, support plate; 203', third through hole;
300, vehicle; 301, cabin; 302, vehicle bottom plate.

### DETAILED DESCRIPTION

Embodiments of the present disclosure are described in further detail below in connection with accompanying drawings and embodiments. Detailed descriptions of the following embodiments and the accompanying drawings are used to exemplarily explain principles of the present disclosure, but cannot be used to limit a scope of the present disclosure, i.e., the present disclosure is not limited to the depicted embodiments.

In the description of the embodiments of the present disclosure, the term "plurality" refers to more than two (including two). Similarly, "plurality of groups" refers to more than two groups (including two groups), and "plurality of pieces" refers to more than two pieces (including two pieces).

The present disclosure utilizes descriptions such as "over", "below", "top", "bottom", "front", "rear", "inner", and "outer" to indicate an orientation or positional relationship. It is only for the convenience of describing the embodiments of the present disclosure, rather than indicating or implying that the pointed device must have a specific orientation, or be constructed and operated in a specific orientation, and therefore cannot be understood as a limitation of the protection scope of the present disclosure.

In addition, terms such as "first", "second", and "third" are used herein for purposes of description and are not intended to indicate or imply relative importance. The term "perpendicular" is not strictly perpendicular, but in tolerance. The term "parallel" is not strictly parallel, but is in tolerance. Orientation words appearing in the following descriptions are orientations shown in the drawings and are not intended to limit a specific structure of the present disclosure.

In the description of the embodiments of the present disclosure, unless specified or limited otherwise, the technical terms "mounted," "connected," "coupled" and "fixed" are understood broadly, such as a fixed connection or a detachable connection or connection as one piece; mechanical connection or electrical connection; direct connection or indirect connection through an intermediate; internal communication of two units or the interaction relationship between two units. For those skilled in the art, the specific meaning of the above-mentioned terms in the embodiments of the present disclosure can be understood according to specific circumstances.

Reference throughout the specification of the present disclosure to "an embodiment" means that a particular feature, structure, or characteristic described in conjunction with the embodiment is included in at least some of the embodiments of the present disclosure. The occurrence of the phrase at various positions in the specification does not necessarily all refer to the same embodiment, nor a separate or alternative embodiment that is mutually exclusive with other embodiments. It is understood by those skilled in the art, both explicitly and implicitly, that the embodiments described herein may be combined with other embodiments.

Battery cells may include a lithium ion secondary battery, a lithium ion primary battery, a lithium sulfur battery, a sodium lithium ion battery, a sodium ion battery, a magnesium ion battery, or the like, which is not limited in the embodiments of the present disclosure. The battery cell may be cylindrical, flat, cuboid, or other shapes, which is not limited in the embodiments of the present disclosure. The battery cells are generally classified into three types based on packaging manner and include cylindrical battery cells, square battery cells, and soft-pack battery cells, which is not limited in the embodiments of the present disclosure.

Currently, the battery cell usually includes a housing and an electrode assembly accommodated in the housing. The housing is filled with electrolyte. The electrode assembly is mainly formed by stacking or winding a first electrode sheet and a second electrode sheet that have opposite polarities, and a separator is usually provided between the first electrode sheet and the second electrode sheet. Parts of the first electrode sheet and the second electrode sheet coated with a coating are formed as a main body of the electrode assembly. Parts of the first electrode sheet and the second electrode sheet without the coating are formed as a first tab and a second tab, respectively. In the lithium ion battery, the first electrode sheet may be a positive electrode sheet including a positive current collector and positive coating layers arranged at two sides of the positive current collector. The positive current collector may be may be made of aluminum. For example, the positive coating may be lithium cobaltite, lithium iron phosphate, ternary lithium, lithium permanganate, or the like. The second electrode sheet may be a negative plate including a negative current collector and negative coating layers arranged at two sides of the negative current collector. The negative current collector may be made of copper, and the negative coating may be graphite or silicon. The first tab and the second tab can be located at one or two ends of the main body. During charging and discharging of the battery cell, the positive coating and the negative coating react with the electrolyte, and the tabs are connected to electrode leading-out portions to form a current circuit.

The pressure relief mechanism refers to an element or unit that is actuated, when an internal pressure or temperature of the battery cell reaches a predetermined threshold, to relieve the internal pressure or heat. The threshold design varies according to different design requirements. The threshold may depend on the material of one or more of the positive electrode sheet, the negative electrode sheet, an electrolyte and the separator of the battery cell. The pressure relief mechanism may take the form of an anti-explosion valve, an air valve, a pressure relief valve or a safety valve, etc., and may specifically adopt a pressure-sensitive or temperature-sensitive element or structure. That is, when the internal pressure or temperature of the battery cell reaches a predetermined threshold, the pressure relief mechanism operates or a weakened structure provided in the pressure relief mechanism is broken, so as to form a through port or channel for relieving the internal pressure or heat.

The "actuation" mentioned in the present disclosure means that the pressure relief mechanism acts or is activated to a certain state, such that the internal pressure and heat of the battery cell can be relieved. Actions produced by the pressure relief mechanism may include, but are not limited to, at least a portion of the pressure relief mechanism being broken, cracked, torn or opened, etc. When the pressure relief mechanism is actuated, high-temperature and high-pressure substances inside the battery cell are discharged outward from an actuated part as emissions. In this way, the pressure of the battery cell can be relieved under a condition of a controllable pressure or temperature, thereby preventing the occurrence of potentially more serious accidents.

The emissions from the battery cell mentioned herein include, but are not limited to, the electrolyte, dissolved or split positive and negative electrode sheets, fragments of the separator, a high-temperature and high-pressure gas (such as CH4, CO, and other combustible gas) generated by a reaction, flames, etc.

The current battery has poor safety during use. It is found through research that safety of a vehicle-mounted power battery is the most important performance requirement. In order to meet a high endurance mileage, an energy density of the battery cell becomes higher and higher, and the high energy density causes an increase in instability of an internal chemical material and a thermal runaway boundary of the battery cell to be lowered accordingly. Therefore, the key to ensure safety of the whole power battery system and the vehicle is that no thermal spreading occurs after the thermal runaway of the battery cell.

In a conventional cylindrical battery, in order to simplify a structure of the battery cell, each of a positive output electrode and a negative output electrode is disposed at a same end as a pressure relief unit. After thermal runaway occurs in the battery cell, a substance discharged from the pressure relief unit is sprayed to a region where a busbar is located, and the busbar is configured to connect the positive output electrode and the negative output electrode of two battery cells to realize a connection between a plurality of battery cells. Since there are a large number of battery cells connected in a series-parallel connection in a battery pack, with a voltage usually above 100 V, a large-area short-circuit or high-voltage ignition may occur, resulting in the occurrence of fire and explosion of the entire power battery system, causing damage and burnout to the vehicle and even loss of life and personal injury.

For the above-mentioned defects, the inventors have conceived that an arrangement position of the pressure relief unit is far away from the positive output electrode and the negative output electrode as much as possible, so that after thermal runaway occurs in the battery cell, the influence of a high-temperature and high-pressure discharge object on the busbar is reduced, and thermal runaway of the whole power battery system is prevented.

Based on this improvement idea, the present disclosure provides an improved battery cell. The battery cell includes a housing and an electrode assembly. The housing is provided with an electrode leading-out portion and a pressure relief unit, and the electrode leading-out portion and the pressure relief unit are respectively disposed at two opposite ends of the housing in a first direction; the electrode assembly is disposed in the housing and includes an electrode body and a first tab and a second tab with an opposite polarity to the first tab. The first tab and the second tab extend from the electrode body, and at least one of the first tab and the second tab is electrically connected to the electrode leading-out portion.

The battery cell according to the embodiments of the present disclosure is applicable to a battery and an electric device using the battery.

The electric device may be a mobile phone, a portable device, a laptop computer, an electric scooter, an electric vehicle, a ship, a spacecraft, an electric toy, an electric tool, and the like. The spacecraft includes an airplane, a rocket, a space shuttle, a spaceship, or the like. The electric toy includes a fixed electric toy or a mobile electric toy, e.g., a game console, an electric car toy, an electric ship toy, and an electric airplane toy. The electric tool includes a metal cutting electric tool, a grinding electric tool, an assembling electric tool, and a railway power tool, e.g., an electric drill, an electric grinding machine, an electric wrench, an electric screwdriver, an electric hammer, an impact electric drill, a concrete vibrator, and an electric planer.

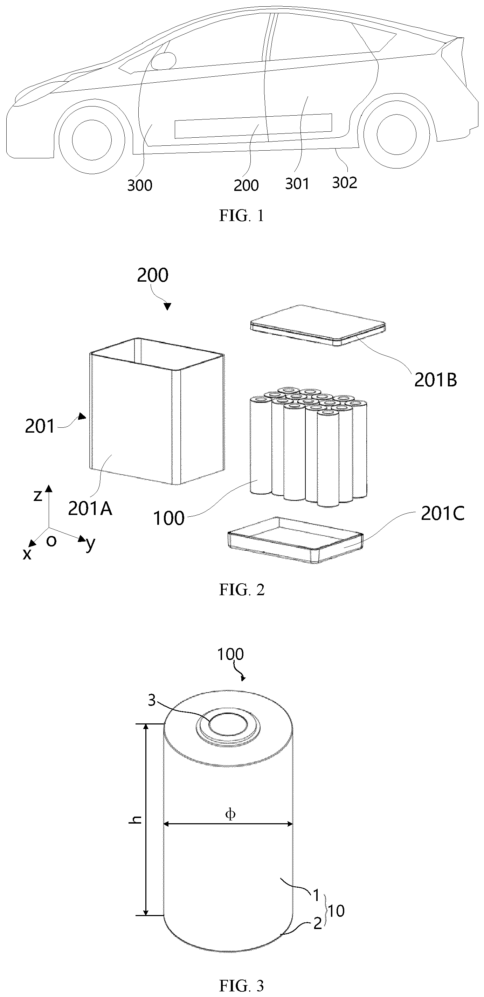

As shown in FIG. 1, the electric device may be a vehicle 300, such as a new energy vehicle, which may be a pure electric vehicle, a hybrid vehicle, or an extended-range vehicle. In other exemplary embodiments, the electric device may also be an unmanned aerial vehicle or a ship. The vehicle 300 may include a cabin 301 and a vehicle bottom plate 302. The battery 200 may be provided between the cabin 301 and the vehicle bottom plate 302. The battery 200 may be disposed at a bottom, head, or tail of the vehicle 300 and configured to provide electrical energy for a motor 303 and other components in the vehicle to operate.

As shown in FIG. 2, the battery 200 includes a battery cell 100. The battery 200 may include one or more battery cells. When the battery 200 includes a plurality of battery cells 100, the plurality of battery cells 100 may be connected in series, in parallel, or in parallel and in series. The parallel and series connection means that the plurality of battery cells 100 are connected in series and in parallel. It is also possible that the plurality of battery cells 100 may be connected in series, in parallel, or in parallel and in series to form a battery module, and a plurality of battery modules is connected in series, in parallel, or in parallel and in series to form an entire structure accommodated in the box body assembly 201. In addition, all the battery cells 100 are directly connected together in series, in parallel, or in parallel and in series, and then the entire structure formed by all the battery cells 100 is accommodated in the box body assembly 201.

The battery 200 in FIG. 2 further includes a box body assembly 201. The box body assembly 201 is internally hollow, and is configured to accommodate one or more battery cells 100. The box body assembly 201 may also have different shapes and sizes based on a shape, the number, combination mode, and other requirements of the battery cells 100 to be accommodated. For example, the box body assembly 201 may include a box body portion 201A, a first cover 201B, and a second cover 201C. Each of two opposite ends of the box body portion 201A has an opening. The first cover 201B and the second cover 201C are configured to close the openings of the box body portion 201A at the two ends of the box body portion 201A. For example, based on an arrangement mode of the plurality of battery cells 100, the box body portion 201A has a rectangular hollow structure. In order to facilitate the maintenance of the battery 200, the box body assembly 201 is detachably mounted at the electric device.

For example, the battery cell 100 is in a cylinder shape, and an axis of the battery cell 100 is disposed in a first direction z. The plurality of battery cells 100 may be provided in an xoy plane perpendicular to the first direction z and may be arranged in a rectangular array in a second direction y and a third direction x, and the second direction y is perpendicular to the third direction x.

Optionally, a structural member of the electric device forms a space for accommodating the battery cell 100, and a function of the structural member is equivalent to the box body assembly 201 in the battery 200. For example, when the battery cell 100 is applied in the vehicle 300, a frame of the vehicle forms the space for accommodating the battery cell 100.

The battery cell 100 may include a lithium ion secondary battery, a lithium ion primary battery, a lithium sulfur battery, a sodium lithium ion battery, a magnesium ion battery, or the like.

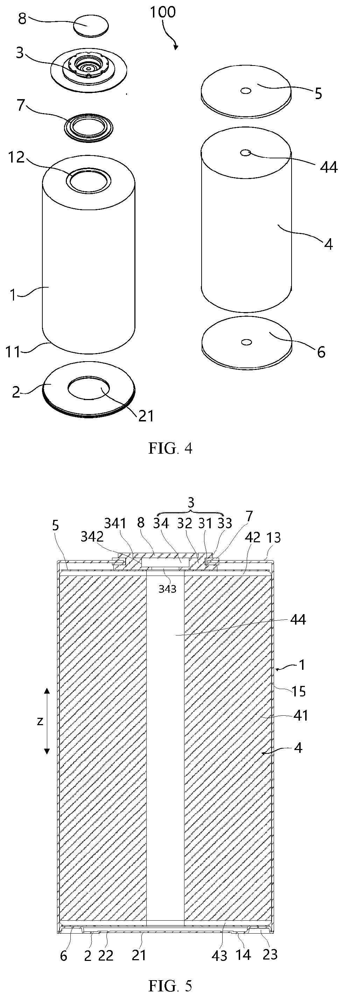

The present disclosure provides a battery cell 100, which is described by taking a cylindrical battery cell 100 as an example in subsequent embodiments. FIG. 3 is a schematic view of an outline of the battery cell 100, FIG. 4 is an exploded view of the battery cell 100, and FIG. 5 is a cross-sectional view of the battery cell 100.

In the improved battery cell 100, the electrode leading-out portion is defined as an output electrode at least partially protruding from an outer wall of the housing 10. In order to subsequently emphasize an embodiment where the battery cell 100 outputs power through the electrode leading-out portion and the housing, for facilitating description, two electrodes of output power are defined as a first output electrode and a second output electrode, respectively.

In some embodiments, the battery cell 100 includes a housing 10, an electrode assembly 4, a first output electrode, and a second output electrode. The electrode assembly 4 includes an electrode body 41, a first tab 42, and a second tab 43 with an opposite polarity to the first tab 42. The first tab 42 and the second tab 43 are protruded from the electrode body 41. The first output electrode is electrically connected to the first tab 42. The second output electrode is electrically connected to the second tab 43. The housing 10 is configured to accommodate the electrode assembly 4. The housing 10 is provided with a pressure relief unit 21. In a first direction z, the first output electrode and the second output electrode are disposed at an end of the housing 10, and the pressure relief unit 21 is disposed at another end of the housing 10.

The housing 10 may be in a thin-walled hollow structure for accommodating the electrode assembly 4. The housing 10 may be in a shape of a cylinder, a flat body, a cuboid shape or other shapes.

The first output electrode and the second output electrode are configured to input or output power. An electrical connection between the first tab 42 and the first output electrode and an electrical connection between the second tab 43 and the second output electrode may be realized through welding, elastic contact, and other manners. The tab may be directly connected to the output electrode, or a connection between the tab and the output electrode may be achieved through a current collector.

A specific structure of the pressure relief unit 21 has been described above. By taking the cylindrical battery cell 100 as an example, the first direction z is consistent with a central axis direction of the battery cell 100, and the first output electrode and the second output electrode and the pressure relief unit 21 are disposed at two opposite ends of the housing 10 in the first direction z, respectively.

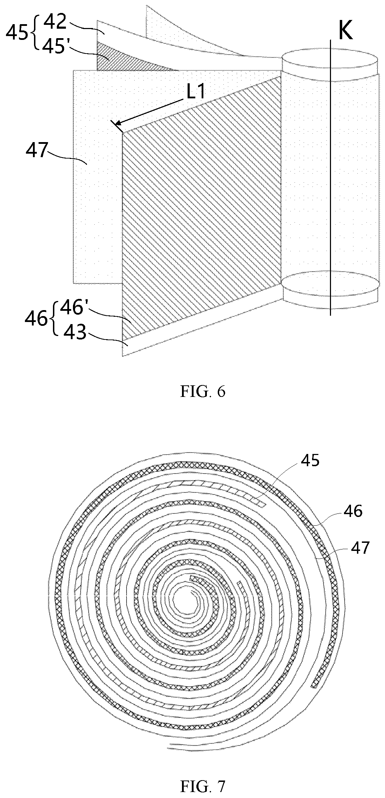

The electrode assembly 4 is disposed in the housing 10. As shown in FIG. 6 and FIG. 7, the electrode assembly 4 is wound around the winding axis K by a first electrode sheet 45 and a second electrode sheet 46 with an opposite polarity to the first electrode sheet 45 to form a winding structure. The winding axis K is consistent with the first direction z, and a separator 47, such as a diaphragm, is usually provided between the first electrode sheet 45 and the second electrode sheet 46. For a cylindrical battery cell 100, the wound electrode assembly 4 may be in a cylinder shape. For a cubic battery cell 100, the wound electrode assembly 4 may be of a flat shape.

The first electrode sheet 45 includes a first current collector. The first current collector includes a first main body and a first tab 42. The first tab 42 protrudes outwards from an end surface of the first main body in the winding direction K. A first coating layer 45' is located at a side surface of the first main body and may be located at two sides of the first main body. For an electrode sheet at an innermost layer or an electrode sheet at an outermost layer, the first coating layer 45' may be located only on a single side of the first main body. The first tab 42 may extend continuously in a length direction of the first electrode sheet 45 to form a continuous tab; or the continuous tab may also be die-cut to form a serrated tab. For example, the first electrode sheet 45 is a positive electrode sheet, the first current collector may be made of aluminum, and the first coating layer 45' may include a first active material layer, such as lithium cobalt oxide, lithium iron phosphate, ternary lithium, or lithium manganate.

The second electrode sheet 46 includes a second current collector. The second current collector includes a second main body and a second tab 43. The second tab 43 protrudes outwards from an end surface of the second main body in the winding direction K. A second coating layer 46' is located at a side surface of the second main body and may be located at two sides of the second main body. For the electrode sheet at the innermost layer or the electrode sheet at the outermost layer, the second coating layer 46' may be located only on a single side of the second main body. The second tab 42 may extend continuously in a length direction of the second electrode sheet 46 to form a continuous tab; or the continuous tab may also be die-cut to form a serrated tab. For example, the second electrode sheet 46 is a negative electrode sheet, the second current collector may be made of copper, and the second coating layer 46' may include a second active material layer, such as graphite or silicon. Alternatively, the first electrode sheet 45 may also be a negative electrode sheet, and the second electrode sheet 46 is a positive electrode sheet.

For the wound electrode assembly 4, the electrode assembly 4 includes an electrode body 41, a first tab 42, and a second tab 43. The first main body of the first electrode sheet 45 and the second body portion of the second electrode sheet 46 form an electrode body 41, and each of the first tab 42 and the second tab 43 extends from the electrode body 41. For example, the first tab 42 and the second tab 43 respectively extend from two ends of the electrode body 41 in the first direction z or extend from an end of the electrode body 41 facing towards the electrode leading-out portion in the first direction z.

In this embodiment, the first output electrode and the second output electrode are disposed at the one end of the housing 10, and the pressure relief unit 21 is disposed at the other end of the housing 10. When thermal runaway occurs inside the battery cell 100, an active substance sprayed out from an end where the pressure relief unit 21 is located is away from the first output electrode and the second output electrode of the battery cell 100, and thus is away from a busbar used for electrically connecting a plurality of battery cells 100. In this way, the influence on the electrical connection between the battery cells 100 can be reduced during the occurrence of thermal runaway, which prevents the occurrence of extensive short circuits or high-voltage ignitions in the battery 200 from causing thermal runaway of the whole power battery system or even causing fire and explosions, thereby improving operation safety of the power battery system. Secondly, the pressure relief unit 21 and the output electrode are disposed at the two ends of the housing 10, which provide a large room for the arrangement of the pressure relief unit 21. In this way, an overcurrent capacity of the output electrode can be improved. Moreover, the pressure relief unit 21 can be conveniently processed, and an opening pressure of the pressure relief unit 21 can be accurately controlled and be prevented from being affected by welding stress during welding of the busbar. In addition, the first output electrode and the second output electrode are disposed at a same end of the housing 10. When the plurality of battery cells 100 is electrically connected to each other, mounting and connection of the busbar can be facilitated.

In some embodiments, as shown in FIG. 5, the housing 10 includes a first end wall 13, a second end wall 14 opposite to the first end wall 13 in the first direction z, and a side wall 15 located between the first end wall 13 and the second end wall 14. The first end wall 13 has a first through hole 12. The battery cell 100 has an electrode leading-out portion 3 mounted at the first through hole 12 and insulated from the first end wall 13. The second end wall 14 is provided with the pressure relief unit 21. The electrode leading-out portion 3 is the first output electrode, and the first end wall 13 is the second output electrode.

For example, the housing 10 is in a cylinder shape, the side wall 15 is in a cylinder shape with two opening ends, and the first end wall 13 and the second end wall 14 are respectively two cylindrical ends for closing the two ends of the side wall 15. The electrode leading-out portion 3 is insulated from the first end wall 13. For example, an insulation member is disposed between the electrode leading-out portion 3 and the first end wall 13, or an insulating adhesive is coated.

The electrode leading-out portion 3 is an output electrode protruding from the housing 10. For example, an electrode terminal and the like are used, to facilitate the realization of an electrical connection between different battery cells 100 through the busbar. The electrode terminal may be designed as a pole, and the pole may be in a cylinder shape, a square column structure, or a column structure with other shapes.

Optionally, the electrode leading-out portion 3 is a positive electrode output electrode, and the first end wall 13 serves as a negative electrode output electrode. Because the first tab 42 and the first current collector 5 are made of aluminum, the electrode leading-out portion 3 is also made of an aluminum material correspondingly without the need for providing an electrode leading-out portion made of a composite material. Alternatively, the electrode leading-out portion 3 is the negative electrode output electrode, and the first end wall 13 serves as the positive electrode output electrode.

Optionally, a polarity of the first end wall 13 is the same as a polarity of an electrode sheet located at an outermost layer in the first electrode sheet 45 and the second electrode sheet 46. Connection polarities of the side wall 15 and the first end wall 13 are the same. When metal particles exist between the electrode assembly 4 and the side wall 15, after the particles pierce a separator 47 at an outermost ring of the electrode assembly 4, the separator 47 is pierced to cause conduction to occur between the electrode sheet at the outermost layer and the side wall 15. When a polarity of the electrode sheet at the outermost layer is the same as a polarity of the side wall 15, a short circuit of the battery cell 100 can be avoided, and safety performance of the battery 200 can be improved.

In this embodiment, the electrode leading-out portion 3 and the first end wall 13 are disposed at the same end of the housing 10, and the pressure relief unit 21 is disposed at the other end of the housing 10. When thermal runaway occurs inside the battery cell 100, the active substance sprayed out from the end where the pressure relief unit 21 is located, is away from the electrode leading-out portion 3 and the first end wall 13 of the battery cell 100, and thus is away from the busbar for electrically connecting the plurality of battery cells 100. In this way, the influence on the electrical connection between the battery cells 100 can be reduced during the occurrence of thermal runaway.

Moreover, the electrode leading-out portion 3 is used as the first output electrode of the battery cell 100, and the first end wall 13 is used as the second output electrode of the battery cell 100, which can omit one electrode leading-out portion, solves the problem of layout difficulty resulting from a small end area of the battery cell 100, and simplifies the structure of the battery cell 100.

In some embodiments, as shown in FIG. 5, the housing 10 includes an accommodation portion 1 and an end cover 2. The accommodation portion 1 has an opening 11. The end cover 2 is configured to cover the opening 11. The accommodation portion 1 is defined by the first end wall 13 and the side wall 15. The end cover 2 is the second end wall 14.

The end cover 2 and the accommodation portion 1 are independent members. The end cover 2 can be made of a metal material like steel or an alloy material. After mounting of the electrode assembly 4 is completed, the end cover 2 can be fixed to the accommodation portion 1 by welding, bonding, or through a fastener connection, and a sealing connection between the end cover 2 and the accommodation portion 1 needs to be achieved to avoid gas leakage.

The first end wall 13 and the side wall 15 may be integrally formed, which is convenient to be processed. When thermal runaway occurs inside the battery cell 100 to cause an increase in pressure, a connection between the first end wall 13 and the side wall 15 has a strong pressure resistance capability and is preferentially subjected to pressure relief through the pressure relief unit 21, to avoid the occurrence of a crack in the connection between the first end wall 13 and the side wall 15, thereby improving pressure relief reliability. Optionally, the first end wall 13 and the side wall 15 are integrally connected by welding or the like.

For example, for the cylindrical battery cell 100, the accommodation portion 1 may be of a cylindrical structure with an opening 11 at one end of the accommodation portion 1, the end cover 2 is of a disk-shaped structure for covering the opening 11, and an end of the accommodation portion 1 away from the opening 11 is closed.

For example, the pressure relief unit 21 is integrally formed at the end cover 2, i.e., a thickness thinning portion is disposed at the end cover 2, and a region enclosed by the thickness thinning portion forms the pressure relief unit 21. For example, the thickness thinning portion may be a notch 22, and the notch 22 may be disposed at an inner wall and/or an outer wall of the end cover 2. After the pressure relief unit 21 is opened, the pressure relief unit 21 is damaged at the thickness thinning portion, thereby forming an opening or channel for relief and discharge of an internal pressure or temperature.

The accommodation portion 1 has a first through hole 12 defined at an end of the accommodation portion 1 away from the end cover 2, the electrode leading-out portion 3 may be mounted in the first through hole 12 from an inner cavity of the accommodation portion 1, and the insulation member 7 is disposed between the electrode leading-out portion 3 and the accommodation portion 1, to realize insulation between the electrode leading-out portion 3 and the accommodation portion 1. The electrode leading-out portion 3 is covered by a cover plate 8.

In this embodiment, the pressure relief unit 21 is disposed at the end cover 2 independent of the accommodation portion 1, which can lower process difficulty of providing the pressure relief unit 21, and more facilitate providing the pressure relief unit 21 integrally at the end cover 2. Moreover, it is easy to control size accuracy of a weak region of the pressure relief unit 21 during processing, to improve setting precision of the opening pressure of the pressure relief unit 21. When thermal runaway occurs in the battery cell 100, the pressure relief unit 21 can be reliably opened, thereby improving the operation safety of the battery cell 100.

Moreover, since each of the first output electrode and the second output electrode is disposed at the first end wall 13 integrally arranged with the side wall 15 and are not disposed at the end cover 2, pulling of a connection between the end cover 2 and the side wall 15 by the busbar is reduced, to avoid generating fatigue at the connection, thereby reducing the influence of the busbar on the pressure relief unit 21. To some extent, damage to the pressure relief unit 21 during normal use of the battery cell 100 is reduced, and pressure relief in advance is prevented.

In some embodiments, the housing 10 includes an accommodation portion 1 and an end cover 2. The accommodation portion 1 has an opening 11. The end cover 2 is configured to cover the opening 11. The accommodation portion 1 is defined by the second end wall 14 and the side wall 15. The end cover 2 is the first end wall 13.

Optionally, the second end wall 14 and the side wall 15 may be formed integrally, which is convenient to be processed. Moreover, the pressure relief unit 21 is provided at the second end wall 14, and stress applied to the connection between the second end wall 14 and the side wall 15 is small, which can reduce pulling stress applied to the pressure relief unit 21, to avoid notch precision of the pressure relief unit 21. When thermal runaway occurs inside the battery cell 100, the pressure relief unit 21 can accurately control the opening pressure to improve the reliability of pressure relief during the thermal runaway. Optionally, the second end wall 14 and the side wall 15 are integrally connected by welding or the like.

In this embodiment, the electrode leading-out portion 3 is disposed at the end cover 2 independent of the accommodation portion 1, so that the electrode leading-out portion 3 can be conveniently mounted at the end cover 2.

Optionally, the accommodation portion 1 has an opening 11 defined at each of two ends of the accommodation portion 1. The openings 11 at the two ends the accommodation portion 1 are each covered by the end cover 2, and the electrode leading-out portion 3 and the pressure relief unit 21 are respectively disposed at the two end covers 2.

In some embodiments, as shown in FIG. 5, the first tab 42 extends from the electrode body 41 in the first direction z and in a direction facing towards the electrode leading-out portion 3. The second tab 43 extends from the electrode body 41 in the first direction z and in a direction facing away from the electrode leading-out portion 3. The first tab 42 is electrically connected to the electrode leading-out portion 3. The second tab 43 is electrically connected to the first end wall 13.

The first tab 42 and the second tab 43 are respectively extend from the two ends of the electrode body 41 in the first direction z. The first tab 42 is closer to the electrode leading-out portion 3, so an electrical connection between the first tab 42 and the electrode leading-out portion 3 can be realized through a direct connection or through the current collector. The second tab 43 is far away from the first end wall 13, so an electrical connection between the second tab 43 and the first end wall 13 can be realized through the side wall 15 of the housing 10 and can also be realized through the current collector and/or the second end wall 13 based on the side wall 15 of the housing 10.

In this embodiment, the first tab 42 and the second tab 43 respectively extend from two ends of the electrode body 41, which can improve an overcurrent capacity, and easily ensure insulation reliability between the first tab 42 and the second tab 43, thereby improving operation performance of the battery cell 100.

In some embodiments, the battery cell 100 further includes a first current collector 5 and a second current collector 6. The first tab 42 is electrically connected to the electrode leading-out portion 3 through the first current collector 5. The second tab 43 is electrically connected to the first end wall 13 through the second current collector 6.

As shown in FIG. 5, the first tab 42 may be fixed to the first current collector 5 by welding. After the electrode assembly 4 and the first current collector 5 are mounted together into the accommodation portion 1, the electrode leading-out portion 3 is welded to the first current collector 5 from an outer side of the first end cover 13. Optionally, the first tab 42 may be directly connected to the electrode leading-out portion 3.

The second tab 43 is far away from the first end wall 13, so an electrical connection between the second tab 43 and the first end wall 13 can be realized through the side wall 15 of the housing 10. The second tab 43 can be directly connected to the side wall 15, or the second tab 43 can be electrically connected to the side wall 15 through the second current collector 6. Specific implementations will be described below.

In this embodiment, the first tab 42 is electrically connected to the electrode leading-out portion 3 through the first current collector 5, and the second tab 43 is electrically connected to the first end wall 13 through the second current collector 6, which can facilitate welding with the tab, and improve reliability of an electrical connection between the first tab 42 and the electrode leading-out portion 3 and reliability of an electrical connection between the second tab 43 and the first end wall 13.

The following provides three implementations where the second tab 43 may be electrically connected to the side wall 15 through the second current collector 6.

In a first implementation, the second current collector 6 is in contact with the side wall 15, to realize electrical conduction between the second tab 43 and the first end wall 13.

Power transmitted by the second tab 43 is directly transmitted to the side wall 15 of the accommodation portion 1 through the second current collector 6. The side wall 15 and the first end cover 13 are integrally formed or are in electrical conduction with each other. Therefore, the power can be transmitted to the first end wall 13. Electrical conduction between the second current collector 6 and the side wall 15 can be realized through tight fit contact, or the second current collector 6 may be welded to the side wall 15.

This embodiment can reduce the link that the power is transmitted by the second tab 43 to the first end wall 13, thereby improving reliability of power transmission.

In a second implementation, the housing 10 includes an accommodation portion 1 and an end cover 2. The accommodation portion 1 has an opening 11. The end cover 2 is configured to cover the opening 11. The second current collector 6 is connected to the end cover 2, and the end cover 2 is electrically connected to the side wall 15, to realize the electrical conduction between the second tab 43 and the first end wall 13.

The second current collector 6 is not in contact with the side wall of the accommodation portion 1. The end cover 2 is connected to the second current collector 6. The power transmitted by the second tab 43 is transmitted to the end cover 2 through the second current collector 6. The end cover 2 may be connected to the side wall 15 by welding or the like. Therefore, the power is transmitted from the end cover 2 to the side wall 15 of the accommodation portion 1 to realize the electrical connection between the second tab 43 and the first end wall 13. Electrical conduction between the second current collector 6 and the end cover 2 can be realized through tight fit contact, or the second current collector 6 may be welded to the end cover 2 from a side of the end cover 2 away from the electrode assembly 4.

Optionally, the end cover 2 may be connected to the second current collector 6 by welding. In order to enable the gas to pass through the second current collector 6 to act on the pressure relief unit 21 when thermal runaway occurs in the battery cell 100, a predetermined distance is formed between the end cover 2 and the second current collector 6 in the first direction z. In order to realize welding between the end cover 2 and the second current collector 6, as shown in FIG. 5, the end cover 2 has an recessed portion 23 protruding in a direction close to the electrode assembly 4 as a whole. The recessed portion 23 abuts against the second current collector 6 and is located at a radially outer side of the pressure relief unit 21. The recessed portion 23 may be welded to the second current collector 6 from the outer side of the end cover 2. For example, the recessed portion 23 may be of an integral annular structure, and is coaxially disposed at an outer side of the pressure relief unit 21, to facilitate achieving great-area welding and improve the reliability of electrical connection; or at least one recessed portion 23 is provided in a circumferential direction of an outer peripheral edge of the pressure relief unit 21.

Optionally, a wall surface of the pressure relief unit 21 at an outermost end relative to the end cover 2 may be recessed inwards by the predetermined distance, to prevent the battery cell 100 from applying an additional acting force to the pressure relief unit 21 when the end cover 2 is placed downwards, to protect the pressure relief unit 21.

In this embodiment, the second tab 43 is electrically connected to the end cover 2. For example, when the electrical connection is realized by welding, the end cover 2 has a flat welding surface, which is convenient for welding and better in welding effect, and can improve reliability of an electrical connection between the second tab 43 and the first end cover 13.

In a third implementation, the housing 10 includes an accommodation portion 1 and an end cover 2. The accommodation portion 1 has an opening 11. The end cover 2 is configured to cover the opening 11. The second current collector 6 is in contact with the side wall 15, and the end cover 2 is connected to the second current collector 6, to realize the electrical conduction between the second tab 43 and the first end wall 13.

The second current collector 6 is in contact with the side wall 15 of the accommodation portion 1 and is electrically connected to the end cover 2. The power transmitted by the second tab 43 can be transmitted to the first end cover 13 through the above two conductive paths simultaneously.

In this embodiment, the power transmitted by the second tab 43 can be transmitted to the first end cover 13 through the two conductive paths. When one of the two conductive paths is virtually connected, the power can be continuously transmitted through the other conductive path, thereby improving the reliability of power transmission.

In some embodiments, the housing 10 includes a second end wall 14, and the pressure relief unit 21 is located in a central region of the second end wall 14.

The electrode assembly 4 has a second through hole 44 disposed at a center of the electrode assembly 4 and extending in the first direction z. When thermal runaway occurs in the battery cell 100, most of internal high-temperature and high-pressure airflow can reach the pressure relief unit 21 along the second through hole 44 and effectively act on the pressure relief unit 21, so that the pressure relief unit 21 is reliably opened.

In this embodiment, by providing the pressure relief unit 21 at a central region of the end cover 2, when thermal runaway occurs in the battery cell 100, the internal high-temperature and high-pressure airflow has a short airflow path no matter which direction reaches the pressure relief unit 21, so that the pressure relief unit 21 is opened timely, thereby improving operation reliability and safety of the battery cell 100.

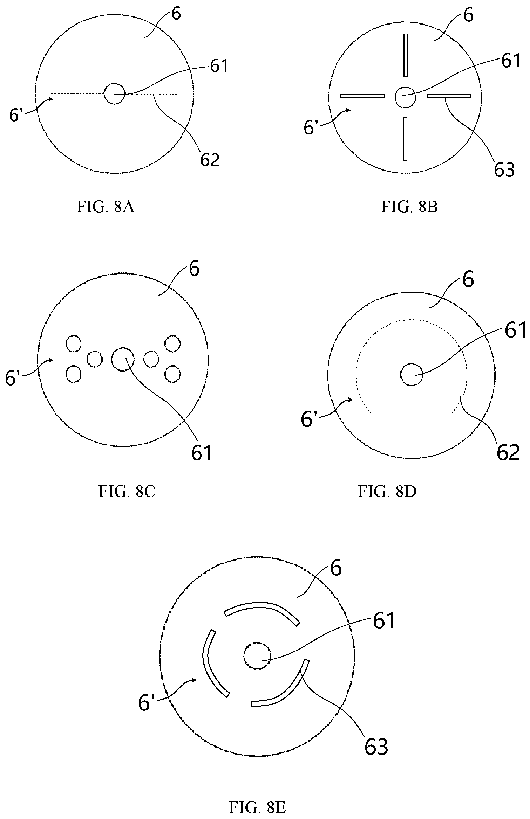

In some embodiments, as shown in FIG. 8A to FIG. 8E, in the first direction z, the second current collector 6 is located between the pressure relief unit 21 and the second tab 43. The second current collector 6 is provided with a hollow portion 6' for gas conduction between a space of a side of the second current collector 6 facing towards the second tab 43 and a space of another side of the second current collector 6 facing towards the pressure relief unit 21.

An arrangement shape and size of the hollow portion 6' not only need to meet the strength of the second current collector 6, but also enable the gas inside the battery cell 100 to quickly and smoothly reach the pressure relief unit 21 when thermal runway occurs in the battery cell 100. The electrode assembly 4 has the second through hole 44 disposed at the center of the electrode assembly 4 and extending in the first direction z. When thermal runaway occurs in the battery cell 100, most of the internal high-temperature and high-pressure airflow can flow along the second through hole 44 and reach the pressure relief unit 21 through the hollow portion 6', so that the pressure relief unit 21 is reliably opened.

In this embodiment, considering that the electrode leading-out portion and the pressure relief unit 21 are disposed at two opposite ends of the housing 10, by providing the hollow portion 6' at the second current collector 6, when thermal runaway occurs in any region inside the battery cell 100, a high-temperature and high-pressure gas can be allowed to smoothly reach the pressure relief unit 21 through the hollow portion 6', to be discharged outwards timely through the pressure relief unit 21, thereby improving safety of the battery cell 100 when thermal runaway occurs.

In some embodiments, as shown in FIG. 8A to FIG. 8E, the hollow portion 6' includes at least one fourth through hole 61. One of the at least one fourth through hole 61 is formed at a center position of the second current collector 6. For example, the fourth through hole 61 may be a circular hole, an elliptical hole, a polygonal hole, or the like.

Generally, a gas in the electrode assembly 4 is discharged out to an outer side of the electrode assembly 4 through a tab side, and the fourth through hole 61 is formed at a center of the second current collector 6, so that the gas discharged from each region of the second tab 43 can reach the fourth through hole 61 timely, thereby smoothly reaching the pressure relief unit 21.

In some embodiments, as shown in FIG. 8C, the at least one fourth through hole 61 includes a plurality of fourth through holes 61. The rest of the plurality of fourth through holes 61 are distributed around the fourth through hole 61 located at the center position of the second current collector 6. For example, the rest of the plurality of fourth through holes 61 may be evenly distributed around the fourth through hole 61 located at the center position of the second current collector 6 or distributed in a region where the second tab 43 is disposed.

In this embodiment, a gas exhaust area can be reasonably increased, and a problem of untimely gas exhaust caused by blockage of the center position of the second current collector 6 is solved to some extent.

In some embodiments, as shown in FIG. 8B and FIG. 8E, the hollow portion 6' further includes a plurality of slots 63 penetrating the second current collector 6 in the first direction z and surrounding the at least one fourth through hole 61. For example, the slot 63 has an elongated shape with a predetermined width. The slot 63 may extend along a straight line, for example, in a radial direction of the circular second current collector 6; or the slot 63 extends along a curve, for example, extends in a circumferential direction of the circular second current collector 6.

In this embodiment, the plurality of slots 63 is disposed on the basis of the fourth through hole 61, so that the fourth through hole 61 can be assisted to exhaust gas. When thermal runaway occurs in the battery cell 100, an airflow can be allowed to reach the pressure relief unit 21 through the fourth through hole 61 and the plurality of slots 63 simultaneously. Moreover, the slot 63 has an elongated shape, which can reduce weakening for a strength of the second current collector 6 based on the realization of gas exhaust, and is also easy to be processed.

In some embodiments, the plurality of slots 63 has an end in communication with the at least one fourth through hole 61 and extending in a direction away from the at least one fourth through hole 61.

For example, the second current collector 6 is circular. An end of the notch 63 is in communication with the fourth through hole 61 and extends in the direction away from the fourth through hole 61 in a radial direction of the second current collector 6. The plurality of slots 63 may be uniformly arranged in the circumferential direction. Optionally, an end of the notch 63 is not in communication with the fourth through hole 61 and has a predetermined distance from the fourth through hole 61.

In this embodiment, reliable gas exhaust can be achieved in a region from the center of the second current collector 6 to a periphery of the second current collector 6. When thermal runaway occurs in the battery cell 100, the airflow can flow to the pressure relief unit 21 more smoothly and timely.

In some embodiments, as shown in FIG. 8A and FIG. 8D, the hollow portion 6' further includes at least one scribing line 62 penetrating the second current collector 6 along the first direction z.

For example, the scribing line 62 is linear. No gap occurs between two side walls forming the scribing line 62 in a same plane theoretically, but in fact, a tiny gap may occur between the two side walls. Under the action of air pressure, the second current collector 6 may deform at the scribing line 62, so that a gap is formed between the two side walls of the scribing line 62. The scribing lines 62 may extend continuously or intermittently to form dashed lines. The scribing line 62 may extend along the straight line, such as in the radial direction of the circular second current collector 6; or the scribing line 62 extend along the curve, such as in the circumferential direction of the circular second current collector 6.

In this embodiment, a plurality of scribing lines 62 is provided on the basis of the fourth through hole 61, to assist in gas exhaust of the fourth through hole 61. When thermal runaway occurs in the battery cell 100, the airflow can reach the pressure relief unit 21 through the fourth through hole 61 and the plurality of scribing lines 62 simultaneously. Moreover, the scribing line 62 can reduce the weakening for the strength of the second current collector 6 based on the implementation of gas exhaust to an utmost extent.

In some embodiments, the at least one scribing line 62 includes a plurality of scribing lines 62. The plurality of scribing lines 62 has an end in communication with the at least one fourth through hole 61 and extending in a direction away from the at least one fourth through hole 61.

For example, the second current collector 6 is in a circular shape. An end of the scribing line 62 is in communication with the fourth through hole 61 and extends in the direction away from the fourth through hole 61 in the radial direction of the second current collector 6, and the plurality of scribing lines 62 may be uniformly arranged in the circumferential direction. Optionally, an end of the notch 63 is not in communication with the fourth through hole 61 and has a predetermined distance from the fourth through hole 61.

In this embodiment, reliable gas exhaust can be achieved in the region from the center of the second current collector 6 to the periphery of the second current collector 6. When thermal runaway occurs in the battery cell 100, the airflow can flow to the pressure relief unit 21 more smoothly and timely.

The hollow portions 6' provided on the second current collector 6 in FIG. 8A to FIG. 8E are described below, respectively.

As shown in FIG. 8A, the hollow portion 6' may include a fourth through hole 61 disposed on the second current collector 6 and a scribing line 62. For example, the second current collector 6 may be in a circular shape. The fourth through hole 61 may be located at the center of the second current collector 6. The scribing line 62 penetrates the second current collector 6. One end of the scribing line 62 is in communication with the fourth through hole 61, and another end of the scribing line 62 extends outwards in the radial direction. For example, the scribing lines 62 may be arranged continuously or discontinuously, and a plurality of scribing lines 62 may be provided and is arranged in a radial shape. For example, four lines 62 may be provided to form a cross shape.

In this embodiment, reliable gas exhaust can be achieved in the region from the center of the second current collector 6 to the periphery of the second current collector 6, and the weakening of the hollow portion 6' for the strength of the second current collector 6 is reduced to the maximum extent. Moreover, the linear scribing line 62 is convenient to be processed.

As shown in FIG. 8B, the hollow portion 6' may include a fourth through hole 61 disposed on the second current collector 6 and a slot 63. For example, the second current collector 6 may be in a circular shape. The fourth through hole 61 may be located at the center of the second current collector 6. The slot 63 penetrates the second current collector 6 and may extend in the radial direction. A plurality of slots 63 may be provided and is arranged in a radial shape. For example, four slots 63 may be provided to form a cross shape.

In this embodiment, reliable gas exhaust can be achieved in the region from the center of the second current collector 6 to the periphery of the second current collector 6, and the weakening for the strength of the second current collector 6 is reduced based on the realization of gas exhaust. Moreover, the linear slot 62 is convenient to be processed.

As shown in FIG. 8C, the hollow portion 6' may include at least one fourth through hole 61 disposed on the second current collector 6. For example, the hollow portion 6' may include one fourth through hole 61. For the circular second current collector 6, the fourth through hole 61 may be disposed at the center position of the second current collector 6; or the hollow portion 6' may include a plurality of fourth through holes 61. For example, one of the fourth through holes 61 is located at the center position of the second current collector 6, and the rest of the plurality of fourth through holes 61 are distributed around the fourth through hole 61 located at the center position of the second current collector 6.

In this embodiment, an area of gas exhaust can be reasonably increased, and the problem of late gas exhaust caused by the blockage of the center position of the second current collector 6 is solved to some extent. Moreover, the hollow portion 6' is easy to be processed.

As shown in FIG. 8D, the difference from FIG. 8A lies in that the scribing line 62 is a curve. For example, the scribing line 62 is arc-shaped or circular. The scribing line 62 may be disposed concentrically with the fourth through hole 61. This embodiment can have a better gas exhaust effect in a circumferential direction of the second current collector 6.

As shown in FIG. 8E, the difference from FIG. 8B lies in that the notch 63 is a curve. For example, the notch 63 is arc-shaped or circular. The notch 63 can be concentrically arranged with the fourth through hole 61. For example, the slots 63 may be continuously disposed or may have a plurality of segments. Slots 63 with the plurality of segments are arranged at interval at an outer periphery of the fourth through hole 61. This embodiment can have a better gas exhaust effect in the circumferential direction of the second current collector 6, and the notch 63 is easy to be processed.

In some embodiments, each of the first tab 42 and the second tab 43 extends from an end of the electrode body 41 facing towards the electrode leading-out portion 3 and along the first direction z. The first tab 42 is electrically connected to the electrode leading-out portion 3, and the second tab 43 is electrically connected to the first end wall 13.

The first tab 42 and the second tab 43 extend from a same end of the electrode body 41 along the first direction z. The first tab 42 is close to the electrode leading-out portion 3, and the second tab 43 is close to the first end wall 13, such that the first tab 42 may be directly connected to the electrode leading-out portion 3 or the electrical connection between the first tab 42 and the electrode leading-out portion 3 is realized through the current collector, and the second tab 43 may be directly connected to the first end wall 13 or the electrical connection between the second tab 43 and the first end wall 13 is realized through the current collector.

In this embodiment, each of the first tab 42 and the second tab 43 extends from the end of the electrode body 41 facing towards the electrode leading-out portion 3, which facilitates the realization of the electrical connection. Moreover, the first tab 42 and the second tab 43 only need to occupy space on a single side of the electrode body 41, which can shorten a height of the battery cell 100, and is beneficial to an improvement in an energy density of the battery cell 100.

In some embodiments, the battery cell 100 further includes a first current collector 5 and a second current collector 6. The first tab 42 is electrically connected to the electrode leading-out portion 3 through the first current collector 5. The second tab 43 is electrically connected to the first end wall 13 through the second current collector 6. The electrode leading-out portion 3 includes a base 31 and a main body 32. The base 31 is located between the first end wall 13 and the first current collector 5 and configured to limit a movement of the electrode leading-out portion 3 along a direction of the first direction z facing away from an interior of the housing 10. An insulation member 7 is provided between the first end wall 13 and the base 31, and the main body 32 is at least partially located in the first through hole 12.

A size of an outer diameter of the base 31 is greater than that of the first through hole 12. The base 31 is used for being electrically connected to the first current collector 5, and a gap is defined between the base 31 and the first end wall 13. The main body 32 is at least partially located in the first through hole 12, and a gap is defined between the main body 32 and an inner wall of the first through hole 12. For example, the electrode leading-out portion 3 is in a stepped cylinder shape as a whole, and the main body 32 is inserted into the first through hole 12 and has a diameter smaller than an inner diameter of the first through hole 12, to facilitate the arrangement of the insulation member 7.

The insulation member 7 may be in a C-shape, and a side wall of the first through hole 12 is partially embedded in an opening of the C-shaped insulation member 7, enabling the insulation member 7 to surround an inner side wall of the first through hole 12 and a region where an inner surface and an outer surface of the first end wall 13 are adjacent to the first through hole 12. A part of the insulation member 7 located at the first end wall 13 and facing towards the first current collector 5 is attached to the inner surface of the first end wall 13.

In this embodiment, the electrode leading-out portion 3 can be prevented from being disengaged from the first through hole 12 through a limiting effect of the base 31, which improves reliability of an electrical connection between the electrode leading-out portion 3 and the first current collector 5. Moreover, insulation between the electrode leading-out portion 3 and the first end wall 13 can be further achieved through the insulation member 7.

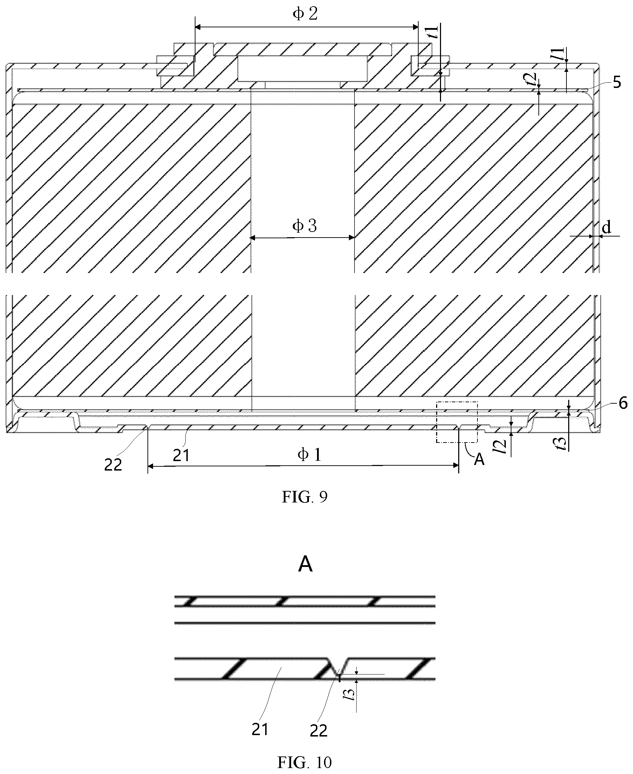

In some embodiments, as shown in FIG. 9, a maximum thickness t1 of the base 31 of the electrode leading-out portion 3 satisfies: 0.6mm≤t1≤1.2mm; and/or a maximum thickness t2 of the first current collector 5 satisfies: 0.3mm≤t2≤0.7mm; and/or a maximum thickness t3 of the second current collector 6 satisfies: 0.3mm≤t3≤0.7mm.

In order to achieve a better effect, 0.8mm≤t1≤1mm, and/or 0.4mm≤t2≤0.6mm, and/or 0.4mm≤t3≤0.6mm.

For example, the maximum thickness t1 of the base 31 may be greater than the maximum thickness t2 of the first current collector 5 or the maximum thickness t3 of the second current collector 6, to prevent the airflow from being sprayed out through a mounting position of the electrode leading-out portion 3 when thermal runaway occurs.

In this embodiment, by setting a proper thickness for each of the base 31 of the electrode leading-out portion 3, the first current collector 5, and the second current collector 6, it can be ensured that gas is discharged out through the pressure relief unit 21 when thermal runaway occurs in the battery cell 100 and is prevented from being sprayed out of a side of the electrode leading-out portion 3 and a side of the first end wall 13, thereby improving the operation safety of the battery cell 100.

In some embodiments, the electrode leading-out portion 3 further includes a limiting protruding portion 33. Each of the base 31 and the limiting protruding portion 33 is connected to and protrudes from an outer peripheral wall of the main body 32, and the limiting protruding portion 33 and the base 31 are respectively located at an outer side and an inner side of the first end wall 13 along the first direction z and are configured to sandwich a part of the first end wall 13.

Each of the base 31 and the limiting protruding portion 33 is connected to the outer peripheral wall of the main body 32. A gap is also defined between the limiting protruding portion 33 and the outer surface of the first end wall 13 for providing the insulation member 7 between the limiting protruding portion 33 and the first end wall 13. For example, the electrode leading-out portion 3 is in a stepped cylinder shape as a whole. Each of a diameter of the base 31 and a diameter of the limiting protruding portion 33 is greater than a diameter of the main body 32. The diameter of the limiting protruding portion 33 is smaller than the diameter of the base. The diameter of the main body 32 is smaller than the inner diameter of the first through hole 12.

A groove is defined between the base 31, the main body 32, and the limiting protruding portion 33 at an outer side wall of the electrode leading-out portion 3. The insulation member 7 may be in a C-shape and embedded in the groove, and has an opening consistent with an opening direction of the groove. The side wall of the first through hole 12 is partially embedded in the opening of the C-shaped insulation member 7, so that the insulation member 7 has a first cantilever located between the first end wall 13 and the base 31 and protruding from the base 31 and a second cantilever located between the first end wall 13 and the limiting protruding portion 33 and protruding from the limiting protruding portion 33, and a side wall connects the first cantilever and the second cantilever and is partially located between the inner wall of the first through hole 12 and the main body 32. Outer ends of the two cantilevers of the insulation member 7 respectively enable the insulation member 7 to reliably achieve the insulation between the electrode leading-out portion 3 and the first end wall 13, and prevent the high-pressure gas from escaping from the gap between the first end wall 13 and the electrode leading-out portion 3 during the thermal runaway.

In this embodiment, a part of the first end wall 13 is sandwiched by the limiting protruding portion 33 and the base 31, so that the electrode leading-out portion 3 can be mounted at the first end wall 13 more stably and reliably.

In some embodiments, the main body 32 is provided with a recess 34. The electrode leading-out portion 3 is in electrical conduction with the first tab 42 through a connection between a bottom wall of the recess 34 and the first current collector 5. An opening of the recess 34 is located at a side of the main body 32 facing towards and/or away from the interior of the housing 10.

As shown in FIG. 5, the opening of the recess 34 is provided at the side of the main body 32 facing away from the interior of the housing 10, so that the bottom wall of the recess 34 is close to the first current collector 5, which facilitates an electrical connection between the bottom wall of the recess 34 and the first current collector 5. The first current collector 5 may be designed as a flat plate structure to reduce processing difficulty. The recess 34 is in a step shape and includes a first recess 341 and a second recess 342. The second recess 342 is disposed at a bottom wall of the first recess 341. An inner diameter of the second recess 342 is smaller than an inner diameter of the first recess 341. The second recess 342 has a third through hole 343 defined at a bottom wall of the second recess 342 for injecting an electrolyte into the housing 10. The cover plate 8 is embedded in the first groove 341 for sealing the opening of the recess 34 to close the third through hole 343.

In this embodiment, by providing the recess 34 at the main body 32, a thickness of a region where the main body 32 is electrically connected to the first current collector 5 can be reduced, and reliability of the electrical connection between the main body 32 and the first current collector 5 can be improved.

In some embodiments, the bottom wall of the recess 34 and the first current collector 5 are laser-welded to each other on the side of the main body 32 away from the interior of the housing 10.

In this embodiment, by providing the recess 34, a thickness of a region where the main body 32 is welded to the first current collector 5 is reduced, and the main body 32 can be conveniently welded to the first current collector 5 from an outer side of the electrode leading-out portion 3, which can improve welding reliability. Moreover, metal ions generated by welding will not enter the housing 10, which can improve reliability of the battery cell 100.

In some embodiments, as shown in FIG. 9, the housing 10 is in a cylinder shape; the pressure relief unit 21 is disposed at a center position of the second end wall 14 and in a circular shape; and the pressure relief unit 21 has a pressure relief region. A diameter φ1 of the pressure relief region and a diameter φ of the housing 10 satisfy: $0.35 \leq \frac{∅ 1}{∅} \leq 0.85$.

The pressure relief unit 21 is formed by providing a thickness thinning portion. For example, the thickness thinning portion is the notch 22, and a region enclosed by the notch 22 forms a pressure relief region. In order to facilitate measurement, a diameter ϕ 1 of the pressure relief region may be represented by a diameter of a circle enclosed by the inner side wall of the notch 22. In a structural form, the pressure relief unit 21 is integrally formed at the second end wall 14, i.e., the notch 22 is directly processed on the second end wall 14. In another structural form, the pressure relief unit 21 is an independent unit, and an outer side wall of the pressure relief unit 21 is connected to the second end wall 14 by welding. A diameter of the outer side wall of the pressure relief unit 21 is greater than a maximum diameter of the notch 22. At this time, the diameter of the pressure relief region is still the diameter of the circle enclosed by the inner side wall of the notch 22.

When ϕ 1<0.35 * ϕ, an opening area of the pressure relief region of the pressure relief unit 21 is insufficient when thermal runaway is caused by the battery cell 100 being close to the electrode leading-out portion 3, and a rate of the heat discharged out of the battery cell 100 is too slow, so damage or even thermal leakage may occur in the electrode leading-out portion 3 or the housing 10. When ϕ 1>0.85* ϕ, since an area proportion occupied by the pressure relief region of the pressure relief unit 21 at the second end wall 14 is large, insufficient strength of the second end wall 14 is caused, and the pressure relief unit 21 is opened by the air pressure generated during the use of the battery cell 100, resulting in problems of liquid leakage and an abnormal electrical connection.

The influence of a diameter design of the pressure relief unit 21 on the safety of the battery cell 100 is described below through Table 1, and a unit of a size parameter in the following table is mm.

**Table 1 The influence of the diameter design of the pressure relief region of the pressure relief unit 21 on the safety of the battery cell 100**

| | ϕ | ϕ 1 | ϕ 1/ ϕ | 0.35* ϕ | 0.85* ϕ | Whether the electrical connection side is damaged in response to needling failure when being close to an electrical connection side | Whether liquid leakage occurs during the use of the battery |
|---|---|---|---|---|---|---|---|
| Embodiment 1 | 45 | 15 | 0.33 | 15.8 | 38.3 | Yes | No |
| Embodiment 2 | 45 | 20 | 0.44 | 15.8 | 38.3 | No | No |
| Embodiment 3 | 45 | 25 | 0.56 | 15.8 | 38.3 | No | No |
| Embodiment 4 | 45 | 30 | 0.67 | 15.8 | 38.3 | No | No |
| Embodiment 5 | 45 | 35 | 0.78 | 15.8 | 38.3 | No | No |
| Embodiment 6 | 45 | 40 | 0.89 | 15.8 | 38.3 | No | Yes |

In Table 1, for Embodiment 1, $\frac{∅ 1}{∅} < 0.35$, the area proportion occupied by the pressure relief region of the pressure relief unit 21 is smaller than that of an end portion of the housing 10. During a needling failure test performed at a side where the electrode leading-out portion 3 and the first end wall 13 are located, when short circuit occurs in the battery cell 100 and when thermal runway occurs inside the battery cell 100, since a weak part of the pressure relief unit 21 is small, for example, the notch is short, the opening difficulty is increased. Even if a speed of discharging the high-temperature and high-pressure gas from the pressure relief unit 21 is slow after the pressure relief unit 21 is opened, an instantaneous high pressure causes the gas to be discharged at a side facing towards the electrode leading-out portion, which may cause damage to the electrode leading-out portion, thereby resulting in an electrical connection failure of the battery cell 100. However, due to the small area of the pressure relief region of the pressure relief unit 21, a strength of the end cover 2 having the pressure relief unit 21 can be ensured, and a liquid leakage phenomenon is not prone to occurring during use. In each table, the side where the electrode leading-out portion 3 and the first end wall 13 are located is simply referred to as an "electrical connection side".

For Embodiments 2 to 5, $0.35 < \frac{∅ 1}{∅} < 0.85$, the area proportion occupied by the pressure relief region of the pressure relief unit 21 is greater than that of the end portion of the housing 10. During the needling failure test performed at the side where the electrode leading-out portion 3 and the first end wall 13 are located, when short circuit occurs in the battery cell 100 and when thermal runway occurs inside the battery cell 100, since the weak part of the pressure relief unit 21 is great, for example, the notch is long, the opening difficulty is lowered. Moreover, after the pressure relief unit 21 is opened, the high-temperature and high-pressure gas may be discharged from the pressure relief unit 21 quickly, to prevent the gas from being discharged from a side facing towards the electrode leading-out portion3, thereby avoiding the damage to the electrode leading-out portion 3 and ensuring an effective electrical connection of the battery cell 100. However, in Embodiment 6, due to the great area of the pressure relief unit 21, the strength of the end cover 2 having the pressure relief unit 21 is lowered, and the liquid leakage phenomenon occurs during use.

In this embodiment, by setting a relationship between the diameter of the pressure relief region of the pressure relief unit 21 and the diameter of the housing 10, when thermal runaway occurs in the battery cell 100, it can be ensured that the pressure relief unit 21 has a sufficient opening area, so that heat is quickly discharged out of the battery cell 100, thereby avoiding the occurrence of damage or even thermal leakage of the electrode leading-out portion or the housing 10. Moreover, on the basis that it is ensured that the pressure relief unit 21 is reliably opened, a strength of an end of the housing 10 provided with the pressure relief unit 21 can also be improved, and problems of liquid leakage, abnormal electrical connection, and the like caused by opening of the pressure relief unit 21 resulting from an internal air pressure during normal use of the battery cell 100 are prevented.

In some embodiments, the housing 10 is in a cylinder shape and has a diameter ϕ, and 15mm ≤ ϕ ≤ 70mm.

In order to achieve a better effect, ϕ may be selected between 30 mm and 55 mm. When ϕ < 15mm and ϕ > 70mm, the power of the battery 200 is insufficient. When the diameter of the housing 10 is too small, the energy density of the battery cell 100 is small, and when the battery cell 100 is grouped, for example, for the cylindrical battery cell 100, more space is wasted, resulting in insufficient power of the battery 200. When the diameter of the housing 10 is too large, although the energy density of the battery cell 100 is increased, it is possible that when the rest of spaces in the battery 200 are large, the space in the battery 200 is still not enough to accommodate one more row of battery cells 100. Since the number of battery cells 100 in each row is large, more power loss of the battery 200 is caused.

The following describes the influence of the design for h and ϕ on the total power of the battery 200 through Table 2. In the following table, each of the units of h and ϕ is mm, and the unit of the total power is kWh.

**Table 2 The influence of the design for h and ϕ on the total power of the battery 200**

| | h | Ø | Total power kWh |
|---|---|---|---|
| Embodiment 1 | 80 | 18 | 68.5 |
| Embodiment 2 | 80 | 21 | 70.4 |
| Embodiment 3 | 80 | 24 | 70.8 |
| Embodiment 4 | 80 | 27 | 70.5 |
| Embodiment 5 | 80 | 30 | 71.8 |
| Embodiment 6 | 80 | 33 | 73.8 |
| Embodiment 7 | 80 | 36 | 77.8 |
| Embodiment 8 | 80 | 39 | 77.1 |
| Embodiment 9 | 80 | 42 | 76 |
| Embodiment 10 | 80 | 45 | 79.6 |
| Embodiment 11 | 80 | 48 | 72.1 |
| Embodiment 12 | 80 | 51 | 78.7 |
| Embodiment 13 | 80 | 54 | 62.4 |
| Embodiment 14 | 80 | 57 | 70.4 |
| Embodiment 15 | 80 | 60 | 56.6 |

This embodiment can ensure that the battery 200 has sufficient power to satisfy the power requirement and can select the battery cell 100 with a proper diameter according to an internal space of the box body assembly 201, which can improve a space utilization rate in the box body assembly 201 as much as possible, reduce an internal waste space, increase the total power as much as possible in a case where a volume of the battery 200 is constant, and improve the energy density of the battery 200.

In some embodiments, as shown in FIG. 9, the electrode leading-out portion 3 is disposed at the first end wall 13 of the housing 10, the pressure relief unit 21 is disposed at the second end wall 14 of the housing 10, and a thickness *l*1 of the first end wall 13 and a thickness *l*2 of the second end wall 14 satisfy: *l*1≥*l*2.

The housing 10 may include an accommodation portion 1 and an end cover 2. The end cover 2 closes the opening 11 of the accommodation portion 1. The pressure relief unit 21 is disposed at the end cover 2. The end cover 2 serves as the second end wall 14. The thickness *l*2 of the second end wall 14 is the thickness of the end cover 2 and not a thickness at which the notch 22 is provided. The first end wall 13 of the housing 10 is an end wall of the accommodation portion 1 away from the opening 11, i.e., an end wall of the accommodation portion 1 provided with the electrode leading-out portion 3. Each of the thickness *l*1 of the first end wall 13 and the thickness *l*2 of the second end wall 14 is the thickness of most of regions on the end wall. Since protrusions or grooves may be locally defined at the first end wall 13 or the second end wall 14, the influence on a strength of an end wall main body is small. Therefore, in order to facilitate measurement, the thickness of the end wall is represented by the thickness of an end wall main body region.

In order to achieve a better effect, *l*1 ≥ 1.5* *12.* When *l*1 *< l*2, during the occurrence of thermal runaway inside the battery cell 100, a deformation amount of the housing 10 at a pressure relief unit 21 side is located is smaller than a deformation amount at the side where the electrode leading-out portion 3 and the first end wall 13 are located, and thermal leakage easily occurs during thermal runaway.

In this embodiment, the thickness *l*1 of the first end wall 13 is greater than the thickness *l*2 of the second end wall 14. In this way, when thermal runaway occurs inside the battery cell 100, the deformation amount of the housing 10 at the pressure relief unit 21 side is greater than the deformation amount at the side where the electrode leading-out portion 3 and the first end wall 13 are located, so that a gas generated by thermal runaway is reliably discharged from the pressure relief unit 21 at the second end wall 14, thereby preventing the gas from flowing towards a side where the electrode leading-out portion 3 is located to cause a large deformation amount to occur in the first end wall 13, and preventing the occurrence of thermal leakage of the housing 10 when thermal runaway occurs in the housing.

In some embodiments, the thickness *l*1 of the first end wall 13 satisfies: 0.5mm≤*l*1≤1mm; and/or the thickness *l*2 of the second end wall satisfies: 0.3mm≤*l*2≤1mm.

In order to achieve a better effect, 0.6mm ≤ *l*1 ≤ 0.8mm, and/or 0.5mm≤*l*2≤0.8mm.

In this embodiment, a proper thickness is designed for each of the first end wall 13 and the second end wall 14. When thermal runaway occurs in the battery cell 100, a large deformation amount of the housing 10 is caused under the action of an internal high-pressure gas, to prevent the occurrence of the thermal leakage of the housing 10 when thermal runaway occurs in the housing.

In some embodiments, as shown in FIG. 9 and FIG. 10, the second end wall 14 has a notch 22. The pressure relief unit 21 is disposed at a region of the second end wall 14 that is enclosed by the notch 22.

The notch 22 may enclose a circle, an ellipse, a polygon, or the like. Moreover, an extending trajectory of the notch 22 may be closed or not closed.

In this embodiment, when thermal runaway occurs in the battery cell 100, after an internal pressure exceeds a predetermined opening pressure of the pressure relief unit 21, the notch 22 breaks to open the pressure relief unit 21, and an airflow in the housing 10 is discharged outwards through the opening. Therefore, the operation safety of the battery cell 100 is improved.

In some embodiments, a thickness *l*1 of the first end wall 13 and a thickness *l*3 of the notch 22 disposed on the second end wall 14 satisfy: *l*1≥2**l*3.

In order to achieve a better effect, *l*1 ≥ 6**l*3.

The thickness *l*3 of the notch 22 disposed on the second end wall 14 is a distance between the deepest position of the notch 22 and a surface of the second end wall 14 away from the notch 22.

In this embodiment, by setting a size relationship between the thickness *l*1 of the first end wall 13 and the thickness *l*3 of the notch 22 disposed on the second end wall 14, a weak part with a lower strength than that of the first end wall 13 may be formed at the notch 22. When thermal runaway occurs in the battery cell 100, an internal gas can be allowed to preferentially deform at the weak part to enable the pressure relief unit 21 to be quickly opened, so that the internal gas is smoothly discharged. Moreover, even if thermal runaway occurs at a side close to the electrode leading-out portion, the gas can be allowed to flow preferentially towards the pressure relief unit 21, which can avoid the occurrence of a large deformation amount of a region where the first end wall 13 is located under the action of the internal high-pressure gas can be prevented, prevent the occurrence of the thermal leakage of the housing 10 during thermal runaway occurs in the housing 10, and improve safety of the battery cell 100 at the side where the electrode leading-out portion 3 and the first end wall 13 are located.

In some embodiments, in order to achieve a better effect, the thickness *l*1 of the first end wall 13 and the thickness *l*3 of the notch 22 disposed on the second end wall 14 satisfy: *l*1≥6**l*3.

**Table 3 The relationship between the thickness l1 and the thickness l3 on the safety of the battery cell 100**

| | *l*1 | *l*3 | 6**l*3 | Whether the electrical connection side is damaged during a failure of needling close to the electrical connection side |
|---|---|---|---|---|
| Embodiment 1 | 0.7 | 0.1 | 0.6 | No |
| Embodiment 2 | 0.6 | 0.1 | 0.6 | No |
| Embodiment 3 | 0.5 | 0.1 | 0.6 | Yes |
| Embodiment 4 | 0.25 | 0.05 | 0.3 | Yes |
| Embodiment 5 | 0.3 | 0.05 | 0.3 | No |
| Embodiment 6 | 0.35 | 0.05 | 0.3 | No |

In Table 3, for Embodiments 3 and 4, *l*1<6**l*3. During the needling failure test performed close to the side where the electrode leading-out portion 3 and the first end wall 13 are located, when short circuit occurs in the battery cell 100 and thermal runway occurs inside the battery cell 100, since the thickness of the first end wall 13 is small, the high-temperature and high-pressure gas more easily flows towards the first end wall 13, allowing for the occurrence of deformation or damage in the first end wall 13. Moreover, the instantaneous high pressure causes the gas to be discharged at the side facing towards the electrode leading-out portion 3, which may cause the damage to the electrode leading-out portion 3, thereby resulting in the electrical connection failure of the battery cell 100.

In some embodiments, the electrode leading-out portion 3 is disposed at the first end wall 13 of the housing 10. The first end wall 13 has a first through hole 12 for mounting the electrode leading-out portion 3. The pressure relief unit 21 is in a circular shape and has a pressure relief region. A diameter ϕ 2 of the first through hole 12 and a diameter ϕ 1 of the pressure relief region satisfying: ϕ 2 ≤ ϕ 1.

In response to ϕ 2 > ϕ 1, when thermal runaway occurs inside the battery cell 100, the deformation amount at the side of the pressure relief unit 21 is smaller than the deformation amount at the side of the first end wall 13, and the mounting region of the electrode leading-out portion 3 is easy to be damaged and exist thermal leakage occurs. In order to achieve a better effect, ϕ 2≤0.8* ϕ 1.

In this embodiment, the diameter ϕ 2 of the first through hole 12 for mounting the electrode leading-out portion 3 does not exceed the diameter ϕ 1 of the pressure relief region, so that a strength of the housing 10 at the first end wall 13 having the electrode leading-out portion 3 can be improved. When thermal runaway occurs in the battery cell 100, the gas can flow preferentially towards the pressure relief unit 21, which can avoid the occurrence of a large deformation amount of the region where the first end wall 13 is located under the action of the internal high-pressure gas, avoid the occurrence of thermal leakage of the housing 10 during thermal runaway occurs in the housing 10, and improve the safety of the battery cell 100 at the side where the electrode leading-out portion 3 and the first end wall 13 are located.

In some embodiments, the diameter φ2 of the first through hole 12 satisfies: 8mm≤φ2≤25mm; and/or the diameter φ1 of the pressure relief region satisfies: 20mm≤φ1≤35mm.

In order to achieve a better effect, 10mm ≤ ϕ 2≤20mm, and/or 22mm≤ ϕ 1 ≤32mm.

The first through hole 12 is configured to mount the electrode leading-out portion 3. In response to that a size of the first through hole 12 is too small, the diameter of the electrode leading-out portion 3 may be limited to affect the overcurrent capacity of the battery cell 100. In response to that the size of the first through hole 12 is too large, an overall strength of the first end wall 13 of the accommodation portion 1 away from the end cover 2 can be lowered. When thermal runaway occurs in the battery cell, a connection part between the first through hole 12 and the electrode leading-out portion 3 is easy to be deformed. After the gas escapes from the weak part, the safety of the side where the electrode leading-out portion 3 and the first end wall 13 are located will be affected.

In this embodiment, by designing an appropriate size for the diameter of the first through hole 12 and the diameter ϕ 1 of the pressure relief region, a strength of the housing 10 located at an end of the electrode leading-out portion 3 can be ensured. When thermal runaway occurs in the battery cell 100, the gas can flow preferentially towards the pressure relief unit 21, so that the occurrence of a large deformation amount of the region where the first end wall 13 is located under the action of the internal high-pressure gas can be prevented, the occurrence of the thermal leakage of the housing 10 during thermal runaway occurs in the housing 10 is prevented, and the safety of the battery cell 100 at the side where the electrode leading-out portion 3 and the first end wall 13 are located is improved.

In some embodiments, the electrode assembly 4 is formed by winding a first electrode sheet 45, a second electrode sheet 46 with an opposite polarity to the first electrode sheet 45, and a separator 47 around a winding axis K. The winding axis K extends along a direction consistent with the first direction z, and each of the first electrode sheet 45 and the second electrode sheet 46 has the first tab 42 and the second tab 43; and the electrode assembly 4 has a second through hole 44 disposed at a center of the electrode assembly 4 and extending in the first direction z. The pressure relief unit 21 is in a circular shape and has a pressure relief region, and a maximum diameter φ3 of the second through hole 44 and a diameter φ1 of the pressure relief region satisfy: φ3≥0.12*φ1.

In order to achieve a better effect, ϕ 3≥0.15* ϕ 1, so that the gas can quickly reach the pressure relief unit 21 along the second through hole 44 when thermal runaway occurs in the battery cell 100.

**Table 4 The influence of a relationship between the diameter of second through hole 44 and the diameter of the pressure relief region on the safety of the battery cell 100**

| | ϕ 1 | ϕ 3 | 0.12* ϕ 1 | Whether the electrical connection side is damaged during a failure of needling close to the electrical connection side |
|---|---|---|---|---|
| Embodiment 1 | 25 | 2 | 3 | Yes |
| Embodiment 2 | 25 | 3 | 3 | No |
| Embodiment 3 | 25 | 4 | 3 | No |
| Embodiment 4 | 25 | 5 | 3 | No |

In Embodiment 1 of Table 4, ϕ 3< 0.12* ϕ 1. During the needling failure test performed close to the side where the electrode leading-out portion 3 and the first end wall 13 are located, when short circuit occurs in the battery cell 100 and thermal runway occurs inside the battery cell 100, since the diameter of second through hole 44 is too small, the high-temperature and high-pressure gas cannot timely reach the pressure relief unit 21 along the second through hole 44, with a slow discharge speed. Moreover, the instantaneous high pressure causes the gas to be discharged at the side facing towards the electrode leading-out portion, which may cause the damage to the electrode leading-out portion, thereby resulting in the electrical connection failure of the battery cell 100.

In this embodiment, the diameter ϕ 3 of the second through hole 44 and the diameter ϕ 1 of the pressure relief region satisfy the above relationship. When thermal runaway occurs in the battery cell 100, the second through hole 44 has enough channel size to allow for a quick inflow of the internal high-pressure gas to the pressure relief unit 21, so that the pressure relief unit 21 is smoothly opened, which prevents the heat from gathering in the battery cell 100 and being unable to be released, and avoids the occurrence of thermal leakage caused by large deformation and damage of the housing 10, thereby improving the operation safety of the battery cell 100.

In some embodiments, the height of the battery cell 100 in the first direction z is h, which satisfies 60mm≤h≤135mm.

In order to achieve a good effect, h may be in a range from 70 mm to 125 mm. When h< 60mm, the height of the battery cell 100 is insufficient, resulting in a low power of the entire power battery system. When h> 135mm, it is difficult to have a space for the pressure relief unit 21 releasing the discharge object at the bottom in the battery 200. After thermal runaway of the single battery cell 100 occurs, explosion occurs in the battery cell 100, resulting in fire and explosion of the entire battery 200.

In this embodiment, by setting an appropriate height for the battery cell 100, it can not only ensure that the entire battery system has sufficient power, to fully utilize the internal space of the battery 200, but also that the space at a bottom region in the battery 200 can be defined for the pressure relief unit 21 to release the discharge object. Moreover, it can be ensured that the discharge object of the battery cell 100 is smoothly exported during the occurrence of thermal runaway, to prevent the battery 200 from occurring fire and explosion caused by instantaneous occurrence of high temperature and high pressure.

In some embodiments, the housing 10 is in a cylinder shape, and the housing 10 has a diameter as ϕ and a height as h, and $\frac{h}{Φ} ⩽ 3.5$.

In order to achieve a better effect, $\frac{h}{Φ} ⩽ 3$. When $\frac{h}{Φ} > 3.5$, it is not suitable to adopt a structure where the electrode leading-out portion 3 and the pressure relief unit 21 are disposed at two opposite ends of the housing 10. Based on that the battery cell 100 is in an elongated shape, when thermal runaway occurs at a point in the battery cell 100 close to the electrode leading-out portion 3, the internal gas cannot flow to an end where the pressure relief unit 21 is located timely, heat accumulation is increased, and the gas is easier to be sprayed out of the region where the electrode leading-out portion 3 is located, , resulting in a safety event such as a fire occurring in the entire power battery system.

The influence of $\frac{h}{Φ}$ on the safety of the battery cell 100 is described below through Table 5, and the unit of the size parameter in the following table is mm.

Table 5 The influence of $\frac{h}{Φ}$ on the safety of the battery cell 100

| | h | ϕ | h/ ϕ | Whether the electrical connection side is damaged during a failure of needling close to the electrical connection side |
|---|---|---|---|---|
| Embodiment 1 | 80 | 45 | 1.78 | No |
| Embodiment 2 | 100 | 45 | 2.22 | No |
| Embodiment 3 | 120 | 45 | 2.67 | No |
| Embodiment 4 | 140 | 45 | 3.11 | No |
| Embodiment 5 | 160 | 45 | 3.56 | Yes |
| Embodiment 6 | 180 | 45 | 4.00 | Yes |
| Embodiment 7 | 80 | 30 | 2.67 | No |
| Embodiment 8 | 100 | 30 | 3.33 | No |
| Embodiment 9 | 120 | 30 | 4.00 | Yes |

In Table 5, for Embodiments 5, 6, and 9, $\frac{h}{Φ} > 3.5$, a ratio of the height to the diameter of the battery cell 100 is great, and the battery cell 100 is in an elongated shape. During the needling failure test performed at the side where the electrode leading-out portion 3 and the first end wall 13 are located, when short circuit occurs in the battery cell 100 and thermal runway occurs inside the battery cell 100, the high-temperature and high-pressure gas cannot timely reach the pressure relief unit 21 or be discharged out from the pressure relief unit 21. Moreover, the gas may be discharged at the side facing towards the electrode leading-out portion, which may cause the damage to the electrode leading-out portion, thereby resulting in the electrical connection failure of the battery cell 100. For other embodiments, $\frac{h}{Φ} < 3.5$, the ratio of the height to the diameter of the battery cell 100 is moderate. During the needling failure test performed at the side where the electrode leading-out portion 3 and the first end wall 13 are located, when short circuit occurs in the battery cell 100 and thermal runway occurs inside the battery cell 100, the high-temperature and high-pressure gas can timely reach the pressure relief unit 21 or be discharged out from the pressure relief unit 21. Moreover, the gas may be prevented from being discharged at the side facing towards the electrode leading-out portion, which may avoid the damage to the electrode leading-out portion, thereby ensuring the normal electrical connection of the battery cell 100.

In this embodiment, by setting an appropriate ratio of the height to the diameter of the battery cell 100, the internal high-pressure gas can quickly reach the pressure relief unit 21 and be smoothly discharged when thermal runaway occurs in any region inside the battery cell 100, which prevents the high-pressure gas and heat from gathering inside the battery cell 100, avoids events such as fire and explosion of the entire power battery system, and improves the operation safety of battery.

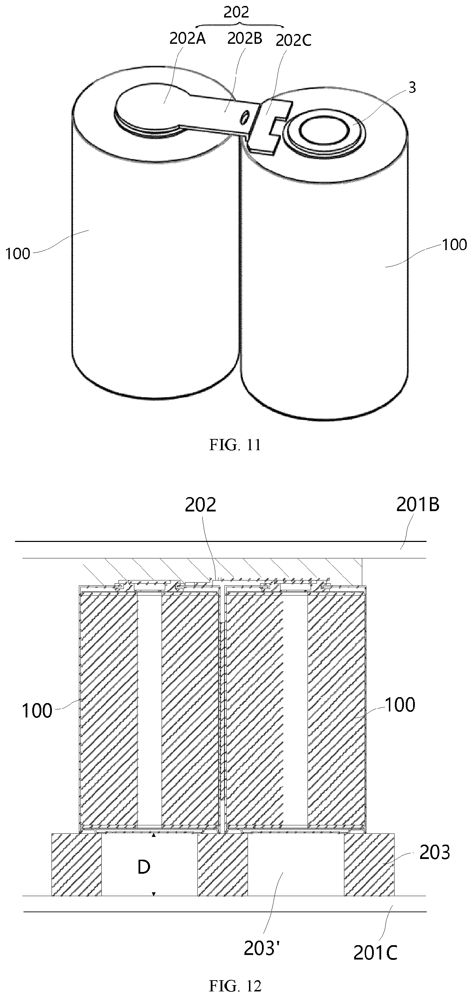

In some embodiments, as shown in FIG. 11, the housing 10 includes a first end wall 13. The first end wall 13 has a first through hole 12. The battery cell 100 has an electrode leading-out portion 3 mounted at the first through hole 12 and insulated from the first end wall 13. The electrode leading-out portion 3 is a first output electrode, and the first end wall 13 is a second output electrode. The battery 200 includes a plurality of battery cells 100 and further includes a busbar 202. An end of the busbar 202 is electrically connected to an electrode leading-out portion 3 of one of the plurality of battery cells 100, and another end of the busbar 202 is electrically connected to a first end wall 13 of another one of the plurality of battery cells 100.

The busbar 202 may adopt a thin plate structure and may be made of a metal conductive material. For example, the busbar 202 may include a first portion 202A, a second portion 202B, and a third portion 202C. The second portion 202B is connected between the first portion 202A and the third portion 202C. The first portion 202A is connected to the electrode leading-out portion 3 of one of the battery cells 100. The third portion 202C is connected to the first end wall 13 of the other battery cell 100. The two battery cells 100 may be disposed adjacent to each other or spaced apart from each other. For example, the first portion 202A has a shape matching a shape of the electrode leading-out portion 3. For example, the first portion 202A may be in a shape of a circle or a rectangle. The third portion 202C may be in a rectangular shape and may have a notch at a side edge of the third portion 202C away from the second portion 202B to avoid the electrode leading-out portion 3 of the other battery cell 100.

**In** this embodiment, by using the electrode leading-out portion 3 as the first output electrode of the battery cell 100 and the first end wall 13 as the second output electrode of the battery cell 100, when it is realized that the plurality of battery cells 100 in the battery 200 are connected in series, in parallel, or in parallel and in series, two ends of the busbar 202 may be directly connected to the electrode leading-out portion 3 and the first end wall 13, respectively. Since only one electrode leading-out portion 3 is provided on the first end wall 13 of the housing 10, it is beneficial to an increase in a conductive area of the electrode leading-out portion 3. Moreover, an electrical connection on the first end wall 13 is also easily realized by welding or through a fastener connection. Therefore, the difficulty of an electrical connection between the plurality of battery cells 100 can be lowered, the reliability of the electrical connection can be improved, and the operation performance and reliability of the battery 200 can be ensured.

**In** some embodiments, as shown in FIG. 11, the housing 10 includes a first end wall 13. The first end wall 13 has a first through hole 12. The battery cell 100 has an electrode leading-out portion 3 mounted at the first through hole 12 and insulated from the first end wall 13. The electrode leading-out portion 3 is a first output electrode, and the first end wall 13 is a second output electrode; and the battery 200 further includes a plurality of busbars 202. In a same battery cell 100, the electrode leading-out portion 3 is electrically connected to one of the plurality of busbars 202, and the first end wall 13 is electrically connected to another one of the plurality of busbars 202.

**In** this embodiment, each battery cell 100 may be electrically connected to other two battery cells 100 through two separate busbars 202. Since a region where the first end wall 13 is located around the electrode leading-out portion 3 can be used for a connection with the busbar 202, it can be adapted to different arrangement manners of the plurality of battery cells 100.

**In** some embodiments, as shown in FIG. 12, the battery 200 further includes a box body assembly 201 and a support plate 203. The battery cell 100 is mounted in the box body assembly 201 through the support plate 203. The support plate 203 has a third through hole 203' defined thereon for flowing of a discharge object escaping from a pressure relief unit 21. The pressure relief unit 21 is in a circular shape and has a pressure relief region, and a minimum distance D between the pressure relief unit 21 and an inner wall of the box body assembly 201 and a diameterφ1 of the pressure relief region satisfy: 0.4*φ1≤D≤1.2*φ1.

For example, the support plate 203 is disposed at an inner bottom surface of the box body assembly 201 and has a plurality of third through holes 203' defined on the support plate 203. The plurality of battery cells 100 faces towards the pressure relief unit 21 and is mounted at the support plate 203. The pressure relief unit 21 and the third through hole 203' have overlapping parts. For example, the pressure relief unit 21, the third through hole 203', and the end cover 2 are concentrically arranged. The third through hole 203' is configured to allow the discharge object escaping from the battery cell 100 to flow to a discharge channel in the battery 200, and finally to be discharged to an outer space through the pressure relief unit on the box body assembly 201 of the battery 200.

The distance D is designed according to the diameter ϕ 1 of the pressure relief region. In order to achieve a better effect, 0.67 * ϕ 1≤D≤ ϕ 1. When D<0.4 * ϕ 1, the distance D between the pressure relief unit 21 and the inner wall of the box body assembly 201 is too small, so that the active material cannot be effectively sprayed out, and the battery 200 cannot be quickly cooled. When D > 1.2 * ϕ 1, the distance D between the pressure relief unit 21 and the inner wall of the box body assembly 201 is too large, and the height of the battery cell 100 is occupied, which affects the energy density.

For example, ϕ 1 has a size ranging from 20 mm to 35 mm, preferably from 22 mm to 32 mm. D has a size ranging from 10 mm to 30 mm, preferably from 15 mm to 25 mm.

The influence of the design for the distance D on a reduction of a temperature of the battery to a predetermined temperature after the thermal runaway of the battery is described below through Table 6, and the unit of each size parameter in the following table is mm.

**Table 6 The influence of the design for the distance D in the battery on the temperature of the battery after the thermal runaway of the battery**

| | ϕ 1 | D | 0.4* ϕ 1 | 1.2* ϕ 1 | Battery height | The time required for the battery to be reduced to 120°C after thermal runaway |
|---|---|---|---|---|---|---|
| Embodiment 1 | 25 | 8 | 10 | 30 | 107 | 20min |
| Embodiment 2 | 25 | 15 | 10 | 30 | 100 | 10min |
| Embodiment 3 | 25 | 20 | 10 | 30 | 95 | 10min |
| Embodiment 4 | 25 | 35 | 10 | 30 | 80 | 10min |

For Embodiment 1, D< 0.67 * ϕ 1, the distance D is too small, so the discharge object cannot be discharged timely through the third through hole 203' when thermal runaway occurs in the battery cell 100, the internal temperature inside the battery 200 rises sharply, and the time required for the battery to be reduced to 120°C is twice that of other embodiments. For Embodiment 4, D>1.2 * ϕ 1, the distance D is too large. Although the discharge object cannot be discharged through the third through hole 203' timely when thermal runaway occurs in the battery cell 100, the thickness of the support plate 203 is large, which obviously reduces the height of the battery cell 100 and affects the energy density of the battery cell 100.

In this embodiment, by providing a proper distance D between the pressure relief unit 21 and the inner wall of the box body assembly 201, the internal gas and the active substance not only can be allowed to be effectively sprayed out when thermal runaway occurs in the battery cell 100, allowing the battery 200 to be quickly cooled, but the height of the battery cell 100 can also be increased as much as possible on the basis of satisfying thermal runaway safety, thereby increasing the energy density of the battery cell 100 and enabling the battery 200 to provide greater power.

In some embodiments, the electric device includes a vehicle 300. The battery 200 is provided between a cabin 301 and a vehicle bottom plate 302. The electrode leading-out portion faces towards the cabin 301, and a pressure relief unit 21 faces towards the vehicle bottom plate 302.

In this embodiment, when thermal runaway occurs in the battery 200 during use, since the pressure relief unit 21 of the battery cell 100 is disposed facing towards the vehicle bottom plate 302, i.e., disposed downwards, in response to that the pressure relief unit 21 is opened, the discharged object released by the battery 200 is sprayed out towards underneath the vehicle, which can reduce an impact of high temperature and high pressure on the cabin 301 and passengers, and improve safety of the vehicle 300 during use.

In some specific embodiments, as shown in FIG. 3 to FIG. 5, the battery cell 100 is of a cylinder shape and includes a housing 10, an electrode assembly 4, and an electrode leading-out portion 3. The housing 10 includes an accommodation portion 1 and an end cover 2. The accommodation portion 1 is of a cylindrical structure and has an opening 11 defined at an end of the accommodation portion 1 in the first direction z (the central axis). The end cover 2 covers the opening 11. The accommodation portion 1 includes a first end wall 13 and a side wall 15, and the end cover 2 serves as the second end wall 14.

The pressure relief unit 21 is integrally provided at the end cover 2, may be in a circular shape, and is disposed at the center position of the end cover 2. The first end wall 13 has a first through hole 12. The first through hole 12 is defined at the center position of the first end wall 13, and the electrode leading-out portion 3 is mounted in the first through hole 12.

The electrode assembly 4 includes an electrode body 41, a first tab 42, and a second tab 43. The first tab 42 and the second tab 43 are respectively located at two ends of the electrode body 41 along the first direction z, and the first direction z is consistent with the winding axis. The first tab 42 is electrically connected to the electrode leading-out portion 3 through the first current collector 5, the second tab 42 is electrically connected to the end cover 2 through the second current collector 6, and the end cover 2 is welded to the accommodation portion 1, allowing the second tab 43 to transmit power to the first end wall 13 through the second current collector 6, the end cover 2, and the side wall 15, for example, the electrode leading-out portion 3 serves as the positive electrode output electrode, and the first end wall 13 serves as the negative electrode output electrode. Alternatively, the electrode leading-out portion 3 serves as the negative electrode output electrode, and the first end wall 13 serves as the positive electrode output electrode.

## Claims

1. A battery cell (100), comprising:
an electrode assembly (4) comprising an electrode body (41), a first tab (42), and a second tab (43) with a polarity opposite to the first tab (42), the first tab (42) and the second tab (43) extending from the electrode body (41);
a first output electrode and a second output electrode, the first output electrode being electrically connected to the first tab (42), and the second output electrode being electrically connected to the second tab (43); and
a housing (10) configured to accommodate the electrode assembly (4), the housing (10) being provided with a pressure relief unit (21), wherein:
in a first direction (z), the first output electrode and the second output electrode are disposed at an end of the housing (10), and the pressure relief unit (21) is disposed at another end of the housing (10);
the housing (10) comprises a first end wall (13), a second end wall (14) opposite to the first end wall (13) in the first direction (z), and a side wall (15) located between the first end wall (13) and the second end wall (14), the first end wall (13) having a first through hole (12), and the second end wall (14) being provided with the pressure relief unit (21);
the battery cell (100) has an electrode leading-out portion (3) mounted at the first through hole (12) and insulated from the first end wall (13),
the electrode leading-out portion (3) being the first output electrode, and the first end wall (13) being the second output electrode; and
the housing (10) is in a cylinder shape, the pressure relief unit (21) is disposed at a center position of the second end wall (14) and in a circular shape, and the pressure relief unit (21) has a pressure relief region, a diameter, φ1, of the pressure relief region and a diameter, φ, of the housing (10) satisfying: $0.35 \leq \frac{φ 1}{φ} \leq 0.85$.

2. The battery cell (100) according to claim 1, wherein the housing (10) comprises:
an accommodation portion (1) having an opening (11), the accommodation portion (1) being defined by the first end wall (13) and the side wall (15); and
an end cover (2) configured to cover the opening (11), the end cover (2) being the second end wall (14).

3. The battery cell (100) according to claim 1 or 2, wherein:
the first tab (42) extends from the electrode body (41) in the first direction (z) and towards the electrode leading-out portion (3) and is electrically connected to the electrode leading-out portion (3); and
the second tab (43) extends from the electrode body (41) in the first direction (z) and away from the electrode leading-out portion (3) and is electrically connected to the first end wall (13).

4. The battery cell (100) according to claim 3, further comprising:
a first current collector (5), the first tab (42) being electrically connected to the electrode leading-out portion (3) through the first current collector (5); and
a second current collector (6), the second tab (43) being electrically connected to the first end wall (13) through the second current collector (6).

5. The battery cell (100) according to claim 4, wherein the second tab (43) is in electrical conduction with the first end wall (13) through a contact between the second current collector (6) and the side wall (15).

6. The battery cell (100) according to claim 4, wherein the housing (10) comprises:
an accommodation portion (1) having an opening (11); and
an end cover (2) configured to cover the opening (11), the second tab (43) being in electrical conduction with the first end wall (13) through a connection between the second current collector (6) and the end cover (2) and through an electrical connection between the end cover (2) and the side wall (15).

7. The battery cell (100) according to claim 4, wherein the housing (10) comprises:
an accommodation portion (1) having an opening (11); and
an end cover (2) configured to cover the opening (11), the second tab (43) being in electrical conduction with the first end wall (13) through a contact between the second current collector (6) and the side wall (15) and through a connection between the end cover (2) and the second current collector (6).

8. The battery cell (100) according to any one of claims 4 to 7, wherein in the first direction (z), the second current collector (6) is located between the pressure relief unit (21) and the second tab (43), the second current collector (6) being provided with a hollow portion (6') for gas conduction between a space of a side of the second current collector (6) facing towards the second tab (43) and a space of another side of the second current collector (6) facing towards the pressure relief unit (21).

9. The battery cell (100) according to claim 8, wherein the hollow portion (6') comprises at least one fourth through hole (61), one of the at least one fourth through hole (61) being formed at a center position of the second current collector (6).

10. The battery cell (100) according to claim 9, wherein the at least one fourth through hole (61) comprises a plurality of fourth through holes (61), the rest of the plurality of fourth through holes (61) being distributed around the fourth through hole (61) located at the center position of the second current collector (6).

11. The battery cell (100) according to claim 9, wherein the hollow portion (6') further comprises a plurality of slots (63) penetrating the second current collector (6) in the first direction (z) and surrounding the at least one fourth through hole (61).

12. The battery cell (100) according to claim 11, wherein an end of the plurality of slots (63) is in communication with the at least one fourth through hole (61) and extends in a direction away from the at least one fourth through hole (61).

13. The battery cell (100) according to claim 9, wherein the hollow portion (6') further comprises at least one scribing line (62) penetrating the second current collector (6) along the first direction (z).

14. The battery cell (100) according to claim 13, wherein the at least one scribing line (62) comprises a plurality of scribing lines (62), and an end of the plurality of scribing lines (62) is in communication with the at least one fourth through hole (61) and extends in a direction away from the at least one fourth through hole (61).

15. The battery cell (100) according to claim 1 or 2, wherein each of the first tab (42) and the second tab (43) extends from an end of the electrode body (41) facing towards the electrode leading-out portion (3) and along the first direction (z), the first tab (42) being electrically connected to the electrode leading-out portion (3), and the second tab (43) being electrically connected to the first end wall (13).

16. The battery cell (100) according to any one of claims 1 to 15, further comprising:
a first current collector (5), the first tab (42) being electrically connected to the electrode leading-out portion (3) through the first current collector (5); and
a second current collector (6), the second tab (43) being electrically connected to the first end wall (13) through the second current collector (6),
wherein the electrode leading-out portion (3) comprises a base (31) and a main body (32), the base (31) being located between the first end wall (13) and the first current collector (5) and configured to limit a movement of the electrode leading-out portion (3) along a direction of the first direction (z) and away from an interior of the housing (10), an insulation member (7) being provided between the first end wall (13) and the base (31), and the main body (32) being at least partially located in the first through hole (12).

17. The battery cell (100) according to claim 16, wherein in the first direction (z):
a maximum thickness, t1, of the base (31) satisfies: 0.6mm≤t1≤1.2mm; and/or
a maximum thickness, t2, of the first current collector (5) satisfies: 0.3mm≤t2≤0.7mm; and/or
a maximum thickness, t3, of the second current collector (6) satisfies: 0.3mm≤t3≤0.7mm.

18. The battery cell (100) according to claim 17, wherein 0.8mm≤t1≤1mm, and/or 0.4mm≤t2≤0.6mm, and/or 0.4mm≤t3≤0.6mm.

19. The battery cell (100) according to any one of claims 16 to 18, wherein the electrode leading-out portion (3) further comprises a limiting protruding portion (33), each of the base (31) and the limiting protruding portion (33) being connected to and protruding from an outer peripheral wall of the main body (32), and the limiting protruding portion (33) and the base (31) being respectively located at an outer side and an inner side of the first end wall (13) along the first direction (z) and being configured to sandwich a part of the first end wall (13).

20. The battery cell (100) according to claim 19, wherein:
the main body (32) is provided with a recess (34) having a bottom wall and an opening;
the electrode leading-out portion (3) is in electrical conduction with the first tab (42) through a connection between the bottom wall of the recess (34) and the first current collector (5); and
the opening of the recess (34) is located at a side of the main body (32) facing towards and/or away from the interior of the housing (10).

21. The battery cell (100) according to claim 20, wherein the bottom wall of the recess (34) and the first current collector (5) are laser-welded to each other on the side of the main body (32) away from the interior of the housing (10).

22. The battery cell (100) according to claim 1, wherein 15mm≤φ≤70mm.

23. The battery cell (100) according to any one of claims 1 to 22, wherein a thickness, *l*1, of the first end wall (13) and a thickness, *l*2, of the second end wall (14) satisfy: *l*1≥*l*2.

24. The battery cell (100) according to claim 23, wherein *l*1≥1.5* *l*2.

25. The battery cell (100) according to claim 23 or 24, wherein:
the thickness *l*1 of the first end wall (13) satisfies: 0.5mm≤*l*1≤1mm; and/or
the thickness *l*2 of the second end wall (14) satisfies: 0.3mm≤*l*2≤1mm.

26. The battery cell (100) according to claim 25, wherein 0.6mm≤*l*1≤0.8mm, and/or 0.5mm≤*l*2≤0.8mm.

27. The battery cell (100) according to any one of claims 1 to 26, wherein the second end wall (14) has a notch (22), the pressure relief unit (21) being disposed at a region of the second end wall (14) that is enclosed by the notch (22).

28. The battery cell (100) according to claim 27, wherein a thickness, *l*1, of the first end wall (13) and a thickness, *l*3, of the notch (22) disposed on the second end wall (14) satisfy: *l*1≥2**l*3.

29. The battery cell (100) according to claim 28, wherein *l*1≥6**l*3.

30. The battery cell (100) according to any one of claims 1 to 29, wherein a diameter, φ2, of the first through hole (12) and the diameter, φ1, of the pressure relief region satisfying: φ2≤φ1.

31. The battery cell (100) according to claim 30, wherein:
the diameter φ2 of the first through hole (12) satisfies: 8mm≤φ2≤25mm; and/or
the diameter φ1 of the pressure relief region satisfies: 20mm≤φ1≤35mm.

32. The battery cell (100) according to any one of claims 1 to 31, wherein:
the electrode assembly (4) is formed by winding a first electrode sheet (45), a second electrode sheet (46) with a polarity opposite to the first electrode sheet (45), and a separator (47) around a winding axis (K), the winding axis (K) extending along a direction consistent with the first direction (z), and first electrode sheet (45) and the second electrode sheet (46) having respectively the first tab (42) and the second tab (43); and
the electrode assembly (4) has a second through hole (44) disposed at a center of the electrode assembly (4) and extending in the first direction (z), and a maximum diameter, φ3, of the second through hole (44) and the diameter, φ1, of the pressure relief region satisfying: φ3≥0.12*φ1.

33. A battery, comprising the battery cell (100) according to any one of claims 1 to 32.

34. The battery according to claim 33, wherein:
the battery (200) comprises a plurality of the battery cells (100) and further comprises a busbar (202), wherein an end of the busbar (202) is electrically connected to an electrode leading-out portion (3) of one of the plurality of battery cells (100), and another end of the busbar (202) is electrically connected to a first end wall (13) of another one of the plurality of battery cells (100).

35. The battery according to claim 33 or 34, wherein:
the battery (200) further comprises a plurality of busbars (202), wherein in a same battery cell (100), the electrode leading-out portion (3) is electrically connected to one of the plurality of busbars (202), and the first end wall (13) is electrically connected to another one of the plurality of busbars (202).

36. The battery according to any one of claims 33 to 35, further comprising:
a support plate (203); and
a box body assembly (201), the battery cell (100) being mounted in the box body assembly (201) through the support plate (203), the support plate (203) having a third through hole (203') defined thereon for flow of a discharge object escaping from a pressure relief unit (21), and a minimum distance, D, between the pressure relief unit (21) and an inner wall of the box body assembly (201) and the diameter, φ1, of the pressure relief region satisfying: 0.4*φ1≤D≤1.2*φ1.

## Patentansprüche

1. Batteriezelle (100), umfassend:
eine Elektrodenanordnung (4), umfassend einen Elektrodenkörper (41), einen ersten Streifen (42) und einen zweiten Streifen (43) mit einer Polarität, die zum ersten Streifen (42) entgegengesetzt ist, wobei sich der erste Streifen (42) und die zweite Streifen (43) vom Elektrodenkörper (41) erstrecken;
eine erste Ausgangselektrode und eine zweite Ausgangselektrode, wobei die erste Ausgangselektrode elektrisch mit dem ersten Streifen (42) verbunden ist und die zweite Ausgangselektrode elektrisch mit dem zweiten Streifen (43) verbunden ist; und
ein Gehäuse (10), das konfiguriert ist, um die Elektrodenanordnung (4) aufzunehmen, wobei das Gehäuse (10) mit einer Druckentlastungseinheit (21) versehen ist, wobei:
in einer ersten Richtung (z) die erste Ausgangselektrode und die zweite Ausgangselektrode an einem Ende des Gehäuses (10) angeordnet sind und die Druckentlastungseinheit (21) an einem anderen Ende des Gehäuses (10) angeordnet ist;
das Gehäuse (10) eine erste Endwand (13), eine zweite Endwand (14), die der ersten Endwand (13) in der ersten Richtung (z) gegenüberliegt, und eine sich zwischen der ersten Endwand (13) und der zweiten Endwand (14) befindende Seitenwand (15) umfasst, wobei die erste Endwand (13) ein erstes Durchgangsloch (12) aufweist und die zweite Endwand (14) mit der Druckentlastungseinheit (21) versehen ist;
die Batteriezelle (100) einen Elektrodenherausführungsabschnitt (3) aufweist, der an dem ersten Durchgangsloch (12) montiert und von der ersten Endwand (13) isoliert ist,
der Elektrodenherausführungsabschnitt (3) die erste Ausgangselektrode ist und die erste Endwand (13) die zweite Ausgangselektrode ist; und
das Gehäuse (10) zylinderförmig ist, die Druckentlastungseinheit (21) an einer zentralen Position der zweiten Endwand (14) angeordnet und kreisförmig ist, und die Druckentlastungseinheit (21) eine Druckentlastungsregion aufweist,
ein Durchmesser φ1 der Druckentlastungsregion und ein Durchmesser φ des Gehäuses (10) Folgendes erfüllen: $0 , 35 \leq \frac{φ 1}{φ} 0 , 85$.

2. Batteriezelle (100) nach Anspruch 1, wobei das Gehäuse (10) Folgendes umfasst:
einen Aufnahmeabschnitt (1), der eine Öffnung (11) aufweist, wobei der Aufnahmeabschnitt (1) durch die erste Endwand (13) und die Seitenwand (15) begrenzt ist; und
eine Endabdeckung (2), die konfiguriert ist, um die Öffnung (11) abzudecken, wobei die Endabdeckung (2) die zweite Endwand (14) ist.

3. Batteriezelle (100) nach Anspruch 1 oder 2, wobei:
sich der erste Streifen (42) vom Elektrodenkörper (41) in der ersten Richtung (z) und in Richtung des Elektrodenherausführungsabschnitts (3) erstreckt und elektrisch mit dem Elektrodenherausführungsabschnitt (3) verbunden ist; und
sich der zweite Streifen (43) vom Elektrodenkörper (41) in der ersten Richtung (z) und vom Elektrodenherausführungsabschnitt (3) weg erstreckt und elektrisch mit der ersten Endwand (13) verbunden ist.

4. Batteriezelle (100) nach Anspruch 3, ferner umfassend:
einen ersten Stromkollektor (5), wobei der erste Streifen (42) über den ersten Stromkollektor (5) elektrisch mit dem Elektrodenherausführungsabschnitt (3) verbunden ist; und
einen zweiten Stromkollektor (6), wobei der zweite Streifen (43) über den zweiten Stromkollektor (6) elektrisch mit der ersten Endwand (13) verbunden ist.

5. Batteriezelle (100) nach Anspruch 4, wobei die zweite Lasche (43) über einen Kontakt zwischen dem zweiten Stromkollektor (6) und der Seitenwand (15) in elektrischer Leitung mit der ersten Endwand (13) ist.

6. Batteriezelle (100) nach Anspruch 4, wobei das Gehäuse (10) Folgendes
umfasst: einen Aufnahmeabschnitt (1) mit einer Öffnung (11); und
eine Endabdeckung (2), die konfiguriert ist, um die Öffnung (11) abzudecken, wobei der zweite Streifen (43) über eine Verbindung zwischen dem zweiten Stromkollektor (6) und der Endabdeckung (2) und über eine elektrische Verbindung zwischen der Endabdeckung (2) und der Seitenwand (15) in elektrischer Leitung mit der ersten Endwand (13) ist.

7. Batteriezelle (100) nach Anspruch 4, wobei das Gehäuse (10) Folgendes
umfasst: einen Aufnahmeabschnitt (1) mit einer Öffnung (11); und
eine Endabdeckung (2), die konfiguriert ist, um die Öffnung (11) abzudecken, wobei der zweite Streifen (43) über einen Kontakt zwischen dem zweiten Stromkollektor (6) und der Seitenwand (15) und über eine Verbindung zwischen der Endabdeckung (2) und dem zweiten Stromkollektor (6) in elektrischer Leitung mit der ersten Endwand (13) ist.

8. Batteriezelle (100) nach einem der Ansprüche 4 bis 7, wobei in der ersten Richtung (z) sich der zweite Stromkollektor (6) zwischen der Druckentlastungseinheit (21) und dem zweiten Streifen (43) befindet, wobei der zweite Stromkollektor (6) mit einem hohlen Abschnitt (6') zur Gasleitung zwischen einem Raum einer Seite des zweiten Stromkollektors (6), die dem zweiten Anschluss (43) zugewandt ist, und einem Raum einer anderen Seite des zweiten Stromkollektors (6), die der Druckentlastungseinheit (21) zugewandt ist, versehen ist.

9. Batteriezelle (100) nach Anspruch 8, wobei der hohle Abschnitt (6') mindestens ein viertes Durchgangsloch (61) umfasst, wobei eines des mindestens einen vierten Durchgangslochs (61) an einer zentralen Position des zweiten Stromkollektors (6) ausgebildet ist.

10. Batteriezelle (100) nach Anspruch 9, wobei das mindestens eine vierte Durchgangsloch (61) eine Vielzahl von vierten Durchgangslöchern (61) umfasst, wobei die übrigen der Vielzahl von vierten Durchgangslöchern (61) um das vierte Durchgangsloch (61) herum verteilt sind, das sich an der zentralen Position des zweiten Stromkollektors (6) befindet.

11. Batteriezelle (100) nach Anspruch 9, wobei der hohle Abschnitt (6') ferner eine Vielzahl von Schlitzen (63) umfasst, die den zweiten Stromkollektor (6) in der ersten Richtung (z) durchdringen und das mindestens eine vierte Durchgangsloch (61) umgeben.

12. Batteriezelle (100) nach Anspruch 11, wobei ein Ende der Vielzahl von Schlitzen (63) mit dem mindestens einen vierten Durchgangsloch (61) in Verbindung steht und sich in einer Richtung weg von dem mindestens einen vierten Durchgangsloch (61) erstreckt.

13. Batteriezelle (100) nach Anspruch 9, wobei der hohle Abschnitt (6') ferner mindestens eine Ritzlinie (62) umfasst, die den zweiten Stromkollektor (6) entlang der ersten Richtung (z) durchdringt.

14. Batteriezelle (100) nach Anspruch 13, wobei die mindestens eine Ritzlinie (62) eine Vielzahl von Ritzlinien (62) umfasst und ein Ende der Vielzahl von Ritzlinien (62) mit dem mindestens einen vierten Durchgangsloch (61) in Verbindung steht und sich in einer Richtung weg von dem mindestens einen vierten Durchgangsloch (61) erstreckt.

15. Batteriezelle (100) nach Anspruch 1 oder 2, wobei sich der erste Streifens (42) und der zweite Streifen (43) jeweils von einem Ende des Elektrodenkörpers (41), das dem Elektrodenherausführungsabschnitt (3) zugewandt ist, und entlang der ersten Richtung (z) erstrecken, wobei der erste Streifen (42) elektrisch mit dem Elektrodenherausführungsabschnitt (3) verbunden ist, und der zweite Streifen (43) elektrisch mit der ersten Endwand (13) verbunden ist.

16. Batteriezelle (100) nach einem der Ansprüche 1 bis 15, ferner umfassend:
einen ersten Stromkollektor (5), wobei der erste Streifen (42) über den ersten Stromkollektor (5) elektrisch mit dem Elektrodenherausführungsabschnitt (3) verbunden ist; und
einen zweiten Stromkollektor (6), wobei der zweite Streifen (43) über den zweiten Stromkollektor (6) elektrisch mit der ersten Endwand (13) verbunden ist,
wobei der Elektrodenherausführungsabschnitt (3) eine Basis (31) und einen Hauptkörper (32) umfasst, wobei sich die Basis (31) zwischen der ersten Endwand (13) und dem ersten Stromkollektor (5) befindet und konfiguriert ist, um eine Bewegung des Elektrodenherausführungsabschnitts (3) entlang einer Richtung der ersten Richtung (z) und weg von einem Inneren des Gehäuses (10) zu begrenzen, wobei zwischen der ersten Endwand (13) und der Basis (31) ein Isolierelement (7) bereitgestellt ist und der Hauptkörper (32) sich mindestens teilweise in dem ersten Durchgangsloch (12) befindet.

17. Batteriezelle (100) nach Anspruch 16, wobei in der ersten Richtung
(z): eine maximale Dicke t1 der Basis (31) Folgendes erfüllt: 0,6 mm ≤ t1
≤ 1,2 mm; und/oder
eine maximale Dicke t2 des ersten Stromkollektors (5) Folgendes erfüllt:
0,3 mm ≤ t2 ≤ 0,7 mm; und/oder
eine maximale Dicke t3 des zweiten Stromkollektors (6) Folgendes erfüllt:
0,3 mm≤t3≤0,7 mm.

18. Batteriezelle (100) nach Anspruch 17, wobei 0,8 mm ≤ t1 ≤ 1 mm und/oder 0,4 mm ≤ t2 ≤ 0,6 mm und/oder 0,4 mm ≤ t3 ≤ 0,6 mm.

19. Batteriezelle (100) nach einem der Ansprüche 16 bis 18, wobei der Elektrodenherausführungsabschnitt (3) ferner einen begrenzenden vorstehenden Abschnitt (33) umfasst, die Basis (31) und der begrenzende vorstehende Abschnitt (33) jeweils mit einer peripheren Außenwand des Hauptkörpers (32) verbunden sind und aus dieser herausragen, und der begrenzende vorstehende Abschnitt (33) und die Basis (31) sich entlang der ersten Richtung (z) jeweils an einer Außenseite bzw. einer Innenseite der ersten Endwand (13) befinden und konfiguriert sind, um einen Teil der ersten Endwand (13) sandwichartig zu umgeben.

20. Batteriezelle (100) nach Anspruch 19, wobei:
der Hauptkörper (32) mit einer Aussparung (34) versehen ist, die eine Bodenwand und eine Öffnung aufweist;
der Elektrodenherausführungsabschnitt (3) über eine Verbindung zwischen der Bodenwand der Aussparung (34) und dem ersten Stromkollektor (5) in elektrischer Leitung mit dem ersten Streifen (42) ist; und
die Öffnung der Aussparung (34) sich an einer Seite des Hauptkörpers (32) befindet, die dem Inneren des Gehäuses (10) zugewandt ist und/oder von diesem abgewandt ist.

21. Batteriezelle (100) nach Anspruch 20, wobei die Bodenwand der Aussparung (34) und der erste Stromkollektor (5) auf der vom Inneren des Gehäuses (10) abgewandten Seite des Hauptkörpers (32) miteinander lasergeschweißt sind.

22. Batteriezelle (100) nach Anspruch 1, wobei Folgendes gilt: 15 mm ≤ φ ≤ 70 mm.

23. Batteriezelle (100) nach einem der Ansprüche 1 bis 22, wobei eine Dicke *l*1 der ersten Endwand (13) und eine Dicke *l*2 der zweiten Endwand (14) Folgendes erfüllen: *l*1≥*l*2.

24. Batteriezelle (100) nach Anspruch 23, wobei Folgendes gilt: *l*1≥1,5* *l*2.

25. Batteriezelle (100) nach Anspruch 23 oder 24, wobei:
die Dicke *l*1 der ersten Endwand (13) Folgendes erfüllt: 0,5 mm ≤*l*1≤1 mm; und/oder
die Dicke *l*2 der zweiten Endwand (14) Folgendes erfüllt: 0,3 mm ≤ *l*2 ≤ 1 mm.

26. Batteriezelle (100) nach Anspruch 25, wobei Folgendes gilt: 0,6 mm ≤ *l*1 ≤ 0,8 mm und/oder 0,5 mm ≤ *l*2 ≤ 0,8 mm.

27. Batteriezelle (100) nach einem der Ansprüche 1 bis 26, wobei die zweite Endwand (14) eine Kerbe (22) aufweist, wobei die Druckentlastungseinheit (21) in einer Region der zweiten Endwand (14) angeordnet ist, die von der Kerbe (22) umschlossen wird.

28. Batteriezelle (100) nach Anspruch 27, wobei eine Dicke *l*1 der ersten Endwand (13) und eine Dicke *l*3 der Kerbe (22), die an der zweiten Endwand (14) angeordnet ist, Folgendes erfüllen: *l*1 ≥ 2**l*3.

29. Batteriezelle (100) nach Anspruch 28, wobei Folgendes gilt: *l*1 ≥ 6**l*3.

30. Batteriezelle (100) nach einem der Ansprüche 1 bis 29, wobei ein Durchmesser φ2 des ersten Durchgangslochs (12) und der Durchmesser φ1 der Druckentlastungsregion Folgendes erfüllen: φ2 ≤ φ1.

31. Batteriezelle (100) nach Anspruch 30, wobei:
der Durchmesser φ2 des ersten Durchgangslochs (12) Folgendes erfüllt: 8 mm ≤ φ2 ≤ 25 mm; und/oder der Durchmesser φ1 der Druckentlastungsregion Folgendes erfüllt: 20 mm≤φ1≤35 mm.

32. Batteriezelle (100) nach einem der Ansprüche 1 bis 31, wobei:
die Elektrodenanordnung (4) durch Wickeln einer ersten Elektrodenplatte (45), einer zweiten Elektrodenplatte (46) mit einer entgegengesetzter Polarität zur ersten Elektrodenplatte (45) und eines Separators (47) um eine Wickelachse (K) ausgebildet ist, wobei sich die Wickelachse (K) entlang einer Richtung erstreckt, die mit der ersten Richtung (z) übereinstimmt, und die erste Elektrodenplatte (45) und die zweite Elektrodenplatte (46) jeweils den ersten Streifen (42) und den zweiten Streifen (43) aufweisen; und
die Elektrodenanordnung (4) ein zweites Durchgangsloch (44) aufweist, das in einer Mitte der Elektrodenanordnung (4) angeordnet ist und sich in der ersten Richtung (z) erstreckt,
und ein maximaler Durchmesser φ3 des zweiten Durchgangslochs (44) und der Durchmesser φ1 der Druckentlastungsregion Folgendes erfüllen: φ3 ≥ 0,12 * φ1.

33. Batterie, umfassend die Batteriezelle (100) nach einem der Ansprüche 1 bis 32.

34. Batterie nach Anspruch 33, wobei:
die Batterie (200) eine Vielzahl der Batteriezellen (100) umfasst und ferner eine Sammelschiene (202) umfasst, wobei ein Ende der Sammelschiene (202) elektrisch mit einem Elektrodenherausführungsabschnitt (3) einer der Vielzahl von Batteriezellen (100) verbunden ist, und ein anderes Ende der Sammelschiene (202) elektrisch mit einer ersten Endwand (13) einer anderen der Vielzahl von Batteriezellen (100) verbunden ist.

35. Batterie nach Anspruch 33 oder 34, wobei:
die Batterie (200) ferner eine Vielzahl von Sammelschienen (202) umfasst, wobei in derselben Batteriezelle (100) der Elektrodenherausführungsabschnitt (3) elektrisch mit einer der Vielzahl von Sammelschienen (202) verbunden ist und die erste Endwand (13) elektrisch mit einer anderen der Vielzahl von Sammelschienen (202) verbunden ist.

36. Batterie nach einem der Ansprüche 33 bis 35, ferner umfassend:
eine Trägerplatte (203); und
eine Kastenkörperanordnung (201), wobei die Batteriezelle (100) über die Trägerplatte (203) in der Kastenkörperanordnung (201) montiert ist, wobei die Trägerplatte (203) ein darin definiertes drittes Durchgangsloch (203') für den Durchfluss eines aus einer Druckentlastungseinheit (21) entweichenden Entlastungsmediums aufweist und eine Mindestentfernung D zwischen der Druckentlastungseinheit (21) und einer Innenwand der Kastenkörperanordnung (201) sowie der Durchmesser φ1 der Druckentlastungsregion Folgendes erfüllen: 0,4*φ1 ≤ D ≤ 1,2*φ1.

## Revendications

1. Cellule de batterie (100), comprenant :
un ensemble électrode (4) comprenant un corps d'électrode (41), une première patte (42), et une deuxième patte (43) de polarité opposée à celle de la première patte (42), la première patte (42) et la deuxième patte (43) s'étendant depuis le corps d'électrode (41) ;
une première électrode de sortie et une deuxième électrode de sortie, la première électrode de sortie étant électriquement raccordée à la première patte (42), et la deuxième électrode de sortie étant électriquement raccordée à la deuxième patte (43) ; et
un logement (10) conçu pour recevoir l'ensemble électrode (4), le logement (10) étant pourvu d'une unité de libération de pression (21), dans laquelle :
dans une première direction (z), la première électrode de sortie et la deuxième électrode de sortie sont disposées au niveau d'une extrémité du logement (10), et l'unité de libération de pression (21) est disposée au niveau d'une autre extrémité du logement (10) ;
le logement (10) comprend une paroi de première extrémité (13), une paroi de deuxième extrémité (14) en regard de la paroi de première extrémité (13) dans la première direction (z), et une paroi latérale (15) située entre la paroi de première extrémité (13) et la paroi de deuxième extrémité (14), la paroi de première extrémité (13) comportant un premier trou traversant (12), et la paroi de deuxième extrémité (14) étant pourvue de l'unité de libération de pression (21) ;
la cellule de batterie (100) comporte une partie sortie d'électrode (3) montée au niveau du premier trou traversant (12) et isolée de la paroi de première extrémité (13),
la partie sortie d'électrode (3) étant la première électrode de sortie, et la paroi de première extrémité (13) étant la deuxième électrode de sortie ; et
le logement (10) est de forme cylindrique, l'unité de libération de pression (21) est disposée au niveau d'une position centrale de la paroi de deuxième extrémité (14) et de forme circulaire, et l'unité de libération de pression (21) comporte une région de libération de pression, un diamètre, φ1, de la région de libération de pression et un diamètre, φ, du logement (10) satisfaisant : $0 , 35 \leq \frac{{φ}^{1}}{φ} \leq 0 , 85$.

2. Cellule de batterie (100) selon la revendication 1, dans laquelle le logement (10) comprend :
une partie de réception (1) comportant une ouverture (11), la partie de réception (1) étant délimitée par la paroi de première extrémité (13) et la paroi latérale (15) ; et
un couvercle d'extrémité (2) conçu pour couvrir l'ouverture (11), le couvercle d'extrémité (2) étant la paroi de deuxième extrémité (14).

3. Cellule de batterie (100) selon la revendication 1 ou 2, dans laquelle :
la première patte (42) s'étend depuis le corps d'électrode (41) dans la première direction (z) et vers la partie sortie d'électrode (3) et est électriquement raccordée à la partie sortie d'électrode (3) ; et
la deuxième patte (43) s'étend depuis le corps d'électrode (41) dans la première direction (z) et à l'opposé de la partie sortie d'électrode (3) et est électriquement raccordée à la paroi de première extrémité (13).

4. Cellule de batterie (100) selon la revendication 3, comprenant en outre :
un premier collecteur de courant (5), la première patte (42) étant électriquement raccordée à la partie sortie d'électrode (3) par l'intermédiaire du premier collecteur de courant (5) ; et
un deuxième collecteur de courant (6), la deuxième patte (43) étant électriquement raccordée à la paroi de première extrémité (13) par l'intermédiaire du deuxième collecteur de courant (6).

5. Cellule de batterie (100) selon la revendication 4, dans laquelle la deuxième patte (43) est en conduction électrique avec la paroi de première extrémité (13) par l'intermédiaire d'un contact entre le deuxième collecteur de courant (6) et la paroi latérale (15).

6. Cellule de batterie (100) selon la revendication 4, dans laquelle le logement (10) comprend une partie de réception (1) comportant une ouverture (11) ; et
un couvercle d'extrémité (2) conçu pour couvrir l'ouverture (11), la deuxième patte (43) étant en conduction électrique avec la paroi de première extrémité (13) par l'intermédiaire d'un raccord entre le deuxième collecteur de courant (6) et le couvercle d'extrémité (2) et par l'intermédiaire d'un raccord électrique entre le couvercle d'extrémité (2) et la paroi latérale (15).

7. Cellule de batterie (100) selon la revendication 4, dans laquelle le logement (10) comprend :
une partie de réception (1) comportant une ouverture (11) ; et
un couvercle d'extrémité (2) conçu pour couvrir l'ouverture (11), la deuxième patte (43) étant en conduction électrique avec la paroi de première extrémité (13) par l'intermédiaire d'un contact entre le deuxième collecteur de courant (6) et la paroi latérale (15) et par l'intermédiaire d'un raccord entre le couvercle d'extrémité (2) et le deuxième collecteur de courant (6).

8. Cellule de batterie (100) selon l'une quelconque des revendications 4 à 7, dans laquelle dans la première direction (z), le deuxième collecteur de courant (6) est situé entre l'unité de libération de pression (21) et la deuxième patte (43), le deuxième collecteur de courant (6) étant pourvu d'une partie creuse (6') destinée à conduire un gaz entre un espace d'un côté du deuxième collecteur de courant (6) qui fait face à la deuxième patte (43) et un espace d'un autre côté du deuxième collecteur de courant (6) qui fait face à l'unité de libération de pression (21).

9. Cellule de batterie (100) selon la revendication 8, dans laquelle la partie creuse (6') comprend au moins un quatrième trou traversant (61), l'un d'au moins un quatrième trou traversant (61) étant formé au niveau d'une position centrale du deuxième collecteur de courant (6).

10. Cellule de batterie (100) selon la revendication 9, dans laquelle l'au moins un quatrième trou traversant (61) comprend une pluralité de quatrièmes trous traversants (61), le reste de la pluralité de quatrièmes trous traversants (61) étant répartis autour du quatrième trou traversant (61) situé au niveau de la position centrale du deuxième collecteur de courant (6).

11. Cellule de batterie (100) selon la revendication 9, dans laquelle la partie creuse (6') comprend en outre une pluralité de fentes (63) pénétrant le deuxième collecteur de courant (6) dans la première direction (z) et entourant l'au moins un quatrième trou traversant (61).

12. Cellule de batterie (100) selon la revendication 11, dans laquelle une extrémité de la pluralité de fentes (63) est en communication avec l'au moins un quatrième trou traversant (61) et s'étend dans une direction qui s'éloigne de l'au moins un quatrième trou traversant (61).

13. Cellule de batterie (100) selon la revendication 9, dans laquelle la partie creuse (6') comprend en outre au moins une ligne rainurée (62) pénétrant le deuxième collecteur de courant (6) le long de la première direction (z).

14. Cellule de batterie (100) selon la revendication 13, dans laquelle l'au moins une ligne rainurée (62) comprend une pluralité de lignes rainurées (62), et une extrémité de la pluralité de lignes rainurées (62) est en communication avec l'au moins un quatrième trou traversant (61) et s'étend dans une direction qui s'éloigne de l'au moins un quatrième trou traversant (61).

15. Cellule de batterie (100) selon la revendication 1 ou 2, dans laquelle chacune de la première patte (42) et la deuxième patte (43) s'étend depuis une extrémité du corps d'électrode (41) faisant face à la partie sortie d'électrode (3) et le long de la première direction (z), la première patte (42) étant électriquement raccordée à la partie sortie d'électrode (3), et la deuxième patte (43) étant électriquement raccordée à la paroi de première extrémité (13).

16. Cellule de batterie (100) selon l'une quelconque des revendications 1 à 15, comprenant en outre :
un premier collecteur de courant (5), la première patte (42) étant électriquement raccordée à la partie sortie d'électrode (3) par l'intermédiaire du premier collecteur de courant (5) ; et
un deuxième collecteur de courant (6), la deuxième patte (43) étant électriquement raccordée à la paroi de première extrémité (13) par l'intermédiaire du deuxième collecteur de courant (6),
dans laquelle la partie sortie d'électrode (3) comprend une base (31) et un corps principal (32), la base (31) étant située entre la paroi de première extrémité (13) et le premier collecteur de courant (5) et conçue pour limiter un mouvement de la partie sortie d'électrode (3) le long d'une direction de la première direction (z) et s'éloignant d'un intérieur du logement (10), un élément d'isolation (7) étant fourni entre la paroi de première extrémité (13) et la base (31), et le corps principal (32) étant au moins en partie situé dans le premier trou traversant (12).

17. Cellule de batterie (100) selon la revendication 16, dans laquelle dans la première direction (z) :
une épaisseur maximale, t1, de la base (31) satisfait : 0,6 mm ≤ t1 ≤ 1,2 mm ; et/ou
une épaisseur maximale, t2, du premier collecteur de courant (5) satisfait : 0,3 mm ≤ t2 ≤ 0,7 mm ; et/ou
une épaisseur maximale, t3, du deuxième collecteur de courant (6) satisfait : 0,3 mm ≤ t3 ≤ 0,7 mm.

18. Cellule de batterie (100) selon la revendication 17, dans laquelle 0,8 mm ≤ t1 ≤ 1 mm, et/ou 0,4 mm ≤ t2 ≤ 0,6 mm, et/ou 0,4 mm ≤ t3 ≤ 0,6 mm.

19. Cellule de batterie (100) selon l'une quelconque des revendications 16 à 18, dans laquelle la partie sortie d'électrode (3) comprend en outre une partie saillante de limitation (33), chacune de la base (31) et de la partie saillante de limitation (33) étant raccordée à et saillant depuis une paroi périphérique externe du corps principal (32), et la partie saillante de limitation (33) et la base (31) étant respectivement situées au niveau d'un côté externe et d'un côté interne de la paroi de première extrémité (13) le long de la première direction (z) et étant conçues pour prendre en sandwich une partie de la paroi de première extrémité (13).

20. Cellule de batterie (100) selon la revendication 19, dans laquelle :
le corps principal (32) est pourvu d'un creux (34) ayant une paroi de fond et une ouverture ;
la partie sortie d'électrode (3) est en conduction électrique avec la première patte (42) par l'intermédiaire d'un raccord entre la paroi de fond du creux (34) et le premier collecteur de courant (5) ; et
l'ouverture du creux (34) est située au niveau d'un côté du corps principal (32) qui est orienté vers et/ou à l'opposé de l'intérieur du logement (10).

21. Cellule de batterie (100) selon la revendication 20, dans laquelle la paroi de fond du creux (34) et le premier collecteur de courant (5) sont soudés au laser l'un à l'autre sur le côté du corps principal (32) éloigné de l'intérieur du logement (10).

22. Cellule de batterie (100) selon la revendication 1, dans laquelle 15 mm ≤ φ ≤ 70 mm.

23. Cellule de batterie (100) selon l'une quelconque des revendications 1 à 22, dans laquelle une épaisseur, *l*1, de la paroi de première extrémité (13) et une épaisseur, *l*2, de la paroi de deuxième extrémité (14) satisfont : *l*1 ≥ *l*2.

24. Cellule de batterie (100) selon la revendication 23, dans laquelle *l*1 ≥ 1.5 * *l*2.

25. Cellule de batterie (100) selon la revendication 23 ou 24, dans laquelle :
l'épaisseur *l*1 de la paroi de première extrémité (13) satisfait : 0,5 mm ≤ *l*1 ≤ 1 mm ; et/ou
l'épaisseur *l*2 de la paroi de deuxième extrémité (14) satisfait : 0,3 mm ≤ *l*2 ≤ 1 mm.

26. Cellule de batterie (100) selon la revendication 25, dans laquelle 0,6 mm ≤ *l*1 ≤ 0,8 mm, et/ou 0,5 mm ≤ *l*2 ≤ 0,8 mm.

27. Cellule de batterie (100) selon l'une quelconque des revendications 1 à 26, dans laquelle la paroi de deuxième extrémité (14) comporte une encoche (22), l'unité de libération de pression (21) étant disposée au niveau d'une région de la paroi de deuxième extrémité (14) qui est entourée par l'encoche (22).

28. Cellule de batterie (100) selon la revendication 27, dans laquelle une épaisseur, *l*1, de la paroi de première extrémité (13) et une épaisseur, *l*3, de l'encoche (22) disposée sur la paroi de deuxième extrémité (14) satisfont : *l*1 ≥ 2 * *l*3.

29. Cellule de batterie (100) selon la revendication 28, dans laquelle *l*1 ≥ 6 * *l*3.

30. Cellule de batterie (100) selon l'une quelconque des revendications 1 à 29, dans laquelle un diamètre, φ2, du premier trou traversant (12) et le diamètre, φ1, de la région de libération de pression satisfont : φ2 ≤ φ1.

31. Cellule de batterie (100) selon la revendication 30, dans laquelle :
le diamètre φ2 du premier trou traversant (12) satisfait : 8 mm ≤ φ2 ≤ 25 mm ; et/ou
le diamètre φ1 de la région de libération de pression satisfait : 20 mm ≤ φ1 ≤ 35 mm.

32. Cellule de batterie (100) selon l'une quelconque des revendications 1 à 31, dans laquelle :
l'ensemble électrode (4) est formé par enroulement d'une première feuille d'électrode (45), d'une deuxième feuille d'électrode (46) de polarité opposée à celle de la première feuille d'électrode (45), et d'un séparateur (47) autour d'un axe d'enroulement (K), l'axe d'enroulement (K) s'étendant le long d'une direction cohérente avec la première direction (z), et la première feuille d'électrode (45) et la deuxième feuille d'électrode (46) comportant respectivement la première patte (42) et la deuxième patte (43) ; et
l'ensemble électrode (4) comporte un deuxième trou traversant (44) disposé au niveau d'un centre de l'ensemble électrode (4) et s'étendant dans la première direction (z), et un diamètre maximal, φ3, du deuxième trou traversant (44) et le diamètre, φ1, de la région de libération de pression satisfont : φ3 ≥ 0,12 * φ1.

33. Batterie, comprenant la cellule de batterie (100) selon l'une quelconque des revendications 1 à 32.

34. Batterie selon la revendication 33, dans laquelle :
la batterie (200) comprend une pluralité de cellules de batterie (100) et comprend en outre une barre omnibus (202), une extrémité de la barre omnibus (202) étant électriquement raccordée à une partie sortie d'électrode (3) de l'une de la pluralité de cellules de batterie (100), et une autre extrémité de la barre omnibus (202) étant électriquement raccordée à une paroi de première extrémité (13) d'une autre de la pluralité de cellules de batterie (100).

35. Batterie selon les revendications 33 ou 34, dans laquelle :
la batterie (200) comprend en outre une pluralité de barres omnibus (202), dans une même cellule de batterie (100) la partie sortie d'électrode (3) étant électriquement raccordée à la pluralité de barres omnibus (202), et la paroi de première extrémité (13) étant électriquement raccordée à une autre de la pluralité de barres omnibus (202).

36. Batterie selon l'une quelconque des revendications 33 à 35, comprenant en outre :
une plaque de support (203) ; et
un ensemble corps de boîte (201), la cellule de batterie (100) étant montée dans l'ensemble corps de boîte (201) par l'intermédiaire de la plaque de support (203), la plaque de support (203) comportant un troisième trou traversant (203') défini dessus pour l'écoulement d'un objet d'évacuation s'échappant d'une unité de libération de pression (21), et une distance minimale, D, entre l'unité de libération de pression (21) et une paroi interne de l'ensemble corps de boîte (201) et le diamètre, φ1, de la région de libération de pression satisfaisant : 0,4 * φ1 ≤ D ≤ 1,2 * φ1.
